# EUROPEAN PATENT APPLICATION

(11) **EP 4 789 988 A1**
(43) Date of publication of application: **12.08.2026**
(21) Application number: 25156957.0
(22) Date of filing: 10.02.2025
(51) Int. Cl.: B65G 1/02, B65G 1/04

(54) **AN AUTOMATED STORAGE AND RETRIEVAL SYSTEM**

(71) Applicant: AutoStore Technology AS, 5578 Nedre Vats (NO)
(72) Inventor: Syre-Aaker, Vegard, 5578 Nedre Vats (NO); Heggebø, Jørgen, 5578 Nedre Vats (NO)
(74) Representative: Kilburn & Strode LLP

(57) **Abstract**

The disclosure relates to an automated storage and retrieval system comprising a first grid having a first grid frame formed by first vertical storage columns for accommodating one or more first stacks of storage containers, a second grid, disposed above the first grid, the second grid having a second grid frame formed by second vertical storage columns for accommodating one or more second stacks of storage containers, and at least one vertical beam disposed in the first grid.

## Description

### TECHNICAL FIELD

The disclosure relates to an automated storage and retrieval system.

### Background

An automated storage and retrieval system is a storage solution in which robots retrieve items from their logged location within the warehouse and deliver the items to a packing station or port.

### Summary

Aspect(s) of the present disclosure are set out in the independent claim(s). Other aspects and features of the present disclosure are set out in the dependent claims and in the description below.

### BRIEF DESCRIPTION OF THE DRAWINGS

Implementations of the present disclosure are described below, by way of example, with reference to the accompanying drawings, in which:
Fig. 1 shows a front left perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first container-handling vehicle suitable for use in the system of Fig. 1;
Fig. 3B shows a side view of a second container-handling vehicle suitable for use in the system of Fig. 1;
Fig. 3C is a front left perspective view of the robot of Fig. 3B;
Fig. 4 shows a computing device for implementing the operations described herein;
Fig. 5 shows a storage system having a second grid disposed above a first grid, wherein the first grid is the grid of Fig. 1;
Figs. 6A and 6B show first and second examples of a vertical beam fixed to a grid frame suitable for use in the system of Fig. 5;
Figs. 7A-F respectively show a C beam, a H beam, a HSS beam, an I beam, an L beam, and a T beam to be arranged as the vertical beams of Figs. 6A and 6B;
Figs. 8A-E show a top view of first to fifth examples of a vertical beam, such as the C beam of Fig. 7A, as a column;
Fig. 9A shows a front view of a first example of a vertical H beam extending through a section of a rail system suitable for use in the system of Fig. 5;
Fig. 9B shows a front right perspective view of the vertical H beam of Fig. 9A;
Fig. 9C shows a front left perspective view of the vertical H beam of Fig. 9A;
Fig. 10A shows a front view of a second example of a vertical H beam extending through a section of a rail system suitable for use in the system of Fig. 5;
Fig. 10B shows a front right perspective view of the vertical H beam of Fig. 10A;
Fig. 10C shows a front left perspective view of the vertical H beam of Fig. 10A;
Fig. 11A shows a front view of an example of a vertical HSS beam extending through a section of a rail system suitable for use in the system of Fig. 5;
Fig. 11B shows a front right perspective view of the vertical HSS beam of Fig. 11A;
Fig. 11C shows a front left perspective view of the vertical HSS beam of Fig. 11A;
Fig. 12A shows a front view of an example of a vertical L beam extending through a section of a rail system suitable for use in the system of Fig. 5;
Fig. 12B shows a front right perspective view of the vertical HSS beam of Fig. 12A;
Fig. 12C shows a front left perspective view of the vertical HSS beam of Fig. 12A;
Fig. 12D shows a back left perspective view of the vertical HSS beam of Fig. 12A;
Fig. 13A shows a front view of an example of a vertical X beam extending through a section of a rail system suitable for use in the system of Fig. 5;
Fig. 13B shows a front right perspective view of the vertical X beam of Fig. 13A;
Fig. 13C shows a front left perspective view of the vertical X beam of Fig. 13A;
Fig. 13D shows a back view of the vertical X beam of Fig. 13A;
Fig. 13E shows a back right perspective view of the vertical X beam of Fig. 13A;
Fig. 13F shows a back left perspective view of the vertical X beam of Fig. 13A;
Fig. 14A shows a front view of a first example of a column comprising an opening having storage container guides for use in the system of Fig. 5;
Fig. 14B shows a left view of the column of Fig. 14A;
Fig. 14C shows a front left perspective view of the column of Fig. 14A;
Fig. 15A shows a front view of the first example of Fig. 14A, having storage container guides that are closed;
Fig. 15B shows a left view of the column of Fig. 15A;
Fig. 15C shows a front left perspective view of the column of Fig. 15A;
Fig. 16A shows a front left perspective view of a second example of a column comprising an opening having storage container guides for use in the system of Fig. 5;
Fig. 16B shows a front right perspective view of the column of Fig. 16A;
Fig. 17A shows a front view of the second example of Fig. 16A, having storage container guides that are closed;
Fig. 17B shows a front right perspective view of the column of Fig. 17A;
Fig. 17C shows a front left perspective view of the column of Fig. 17A;
Fig. 18A shows a front view of a third example of a column comprising an opening having storage container guides for use in the system of Fig. 5;
Fig. 18B shows a front left perspective view of the column of Fig. 18A;
Fig. 19A shows a front view of the third example of Fig. 18A, having storage container guides that are closed;
Fig. 19B shows a left view of the column of Fig. 19A;
Fig. 19C shows a front left perspective view of the column of Fig. 19A;
Fig. 20A shows a left view of a vertical C beam of the third example of Fig. 18A within a two-grid structure for use in the system of Fig. 5;
Fig. 20B shows the portion 'A' of Fig. 20A;
Fig. 20C shows a front left perspective view of the vertical C beam of Fig. 20A;
Fig. 21A shows a left view of a vertical C beam of the third example of Fig. 19A within a two-grid structure for use in the system of Fig. 5;
Fig. 21B shows the portion 'A' of Fig. 21A;
Fig. 21C shows a front left perspective view of the vertical C beam of Fig. 21A;
Fig. 22A shows a right view of an example system comprising a two-grid structure for use in system of Fig. 5;
Fig. 22B shows a front view of the two-grid structure of Fig. 22A;
Fig. 22C shows a front right perspective view of the two-grid structure of Fig. 22A;
Fig. 22D shows a front left perspective view of the two-grid structure of Fig. 22A;
Fig. 23A shows a front view of a section of an example system comprising a two-grid structure for use in system of Fig. 5, the system undergoing a first step within an example sequence;
Fig. 23B shows a front left perspective view of the section of the example system of Fig. 23A, undergoing the first step;
Fig. 23C shows a front view of the section of the example system of Fig. 23A, the system undergoing a second step following the first step within the example sequence;
Fig. 23D shows a front left perspective view of the section of the example system of Fig. 23C, undergoing the second step;
Fig. 23E shows a front view of the section of the example system of Fig. 23A, the system undergoing a third step following the second step within the example sequence;
Fig. 23F shows a front left perspective view of the section of the example system of Fig. 23E, undergoing the third step;
Fig. 23G shows a front view of the section of the example system of Fig. 23A, the system undergoing a fourth step following the third step within the example sequence;
Fig. 23H shows a front left perspective view of the section of the example system of Fig. 23G, undergoing the fourth step;
Fig. 24 shows a flowchart illustrating a method of the present disclosure.
Like reference numerals are used for like components throughout the detailed description.

### DETAILED DESCRIPTION

In overview, the disclosure relates to an automated storage and retrieval system comprising a first grid and a second grid disposed above the first grid. Each grid having a grid frame formed by vertical storage columns that are arranged to accommodate stacks of storage containers. The system further comprises at least one vertical beam disposed in the first grid and configured to structurally support the second grid. The system therefore provides structural support to the second grid disposed above the first grid through use of the vertical beam disposed in the first grid. The vertical beam may be further disposed in the second grid, and/or may be configured to structurally support a floor of the second grid, for additional support. The vertical beam may comprise a column having an opening and at least one storage container guide or guiding means to transport storage containers between the first and second grids.

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station. Space is required to pass between rows of shelves to access stock, so that broad aisles are needed within the warehouse. Retrieval is time consuming and can be inaccurate.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Transport of containers usually occurs within a single grid. Difficulty arises when containers are being transported between two or more grids because the containers may need to be transported between different floors or levels. Different container-handling vehicles may need to be used on each grid. Other factors to consider might be structural support, utilisation of space, durability, scalability, container reachability by the container-handling vehicles, and cost reduction.

One known system and method for container transportation between two or more grids is the Autostore (grid-to-grid) BinLift which allows the connection of two or more grids within a warehouse. The container-handling vehicles place containers on a lift plate inside the grid and the BinLift vertically transports the container to connected infrastructure. Hence, container guiding occurs indirectly because the container is stationary when transported due to the lift plate within the BinLift. This system and method may be costly and lack required durability due to potentially specialist replacement parts or fittings and use a lot of space depending how many BinLifts are required. In addition, the container guiding itself is indirect and does not make good use of the components of the system. It is the lift plate that is directly guided, not the containers. Additional reinforcements may be needed for structural support.

The present disclosure uses direct guiding of the storage containers via storage container guides within vertical beams during storage container transportation, therefore using the structure of the grid itself for alternative uses to create a cost and space benefit. The vertical beams themselves may also be used as port or storage columns to ensure the efficient use of space. The components of the present disclosure would be simple to fix and repair due to the use of non-specialised parts. To provide structural support, the system must be built with one or more vertical beams.

This overview is provided to introduce, in simplified form, a selection of concepts that are further described herein. The presence of a feature in this overview does not imply that the feature is essential to the disclosure.

The present disclosure will now be described in general terms before implementations of the disclosure are described by way of example with reference to the drawings. The word "may" is used to refer to a feature that is optional, i.e. in some implementations of the disclosure, the feature is present, and in some implementations of the disclosure, the feature is not present.

The present disclosure relates to an automated storage and retrieval system. The system may comprise a first grid which may have a first grid frame formed by first vertical storage columns for accommodating one or more first stacks of storage containers. A stack may have one or more containers. The system may comprise second grid. The second grid may be disposed above the first grid, or vertically disposed from the first grid. This has the advantage of reduced footprint of the overall storage. The second grid may have a second grid frame formed by second vertical storage columns. The storage columns may be for accommodating one or more second stacks of storage containers. The second stack may comprise one or more containers. There may be at least one vertical beam disposed in the first grid. The vertical beam may be configured to structurally support the second grid. The has the advantage of eliminating the need for other second floor reinforcements, or other reinforcing means that take up space in the gird.

The at least one vertical beam may be configured to structurally support a floor of the second grid. This minimises or eliminates the need for other reinforcement measures in a space-saving way.

The at least one vertical beam may comprise a column having two at least partially enclosed sides, and an opening. The at least one vertical beam maybe disposed in the second grid. The at least one vertical beam may extend continuously from a base of the first grid frame to a top of the second grid frame. In this way, the beam can be a supporting beam but not take up space in the grid(s).

The at least one vertical beam is one of: a C beam, H beam, HSS beam, I beam, L beam, T beam, or X beam. Other shapes are envisaged. The shapes are compatible with the beam being used as a storage port to maximise use of space, so that the beam may have a dual function of port column and structural support.

The at least one vertical beam may be arranged as a storage column. This means no space is taken up by the beam which might otherwise have been utilised as a storage column. The at least one vertical beam may be arranged as a port column for transit of storage containers between the first and second grids. This allows the beam to function as a port column and not just a structural support.

The first and second grids may each comprise a rail system having a first set of parallel rails that may be arranged in a horizontal plane and extending in a first direction. A second set of parallel rails may be arranged in the horizontal plane and may extend in a second direction which may be orthogonal to the first direction.

The first grid may comprise at least one first container-handling vehicle that may be configured to move along the two sets of parallel rails of the rail system of the first grid. The second grid may comprise at least one second container-handling vehicle that may be configured to move along the two sets of parallel rails of the rail system of the second grid.

The at least one second container-handling vehicle may be configured to raise at least one storage container from the first grid to the second grid via the port column and/or
may lower at least one storage container from the second grid to the first grid via the port column.
The port column may include having two at least partially enclosed sides, and an opening accessible by the first and/or second container-handling vehicles via the opening.
The opening may comprise at least one storage container guide attached to at least one of the two at least partially enclosed sides and configured to at least partially close the opening. The at least one storage container guide may comprise at least one of: a flap, a lip, a door, or a barrier. Other door-like means are possible.
The present disclosure also relates to a method of transferring at least one storage container from a first grid to a second grid of a storage and retrieval system. The first grid may have a first grid frame that may be formed by first vertical storage columns for accommodating one or more first stacks of storage containers. The second grid, which may be disposed above the first grid, may have a second grid frame which may be formed by second vertical storage columns for accommodating one or more second stacks of storage containers. A vertical beam may transverses the first and optionally second grids and may structurally support the second grid, the method may comprise engaging, by a first container-handling vehicle of the first grid, a storage container from the first stack of storage containers. The method may comprise moving, by the first container-handling vehicle, the storage container from the first vertical storage column into the vertical beam in the first grid. The method may comprise moving a second container-handling vehicle of the second grid into the vertical beam in the second grid. The method may comprise engaging, by the second container-handling vehicle, the storage container in the vertical beam in the first grid. The method may comprise raising, by the second container-handling vehicle, the storage container from the first grid to the second grid.
The vertical beam may comprise an opening for receiving the first or second container-handling vehicle. The opening may include at least one storage container guide attached to at least one of two at least partially enclosed sides of the vertical beam that may be configured to at least partially close the opening. The method may further comprise:
Opening the at least one storage container guide for movement of the storage container from the first vertical storage column into the vertical beam in the first grid.
The method may comprise closing the at least one storage container guide for movement of the second container-handling vehicle into the vertical beam in the second grid. The method may comprise closing the at least one storage container guide when the second container-handling vehicle engages with the storage container in the vertical beam. The method may comprise closing the at least one storage container guide when the second container-handling vehicle raises the storage container.
The present disclosure relates to a computer-readable medium comprising instructions which, when executed by a processor of a device, cause the device to perform the method described here.
Each possible combination of any of the above-described features forms part of the present disclosure. A plurality of instances of any feature may also be present. By way of example, implementations of the disclosure will now be described with reference to the drawings. Each possible combination of any features described below with any features described above also forms part of the disclosure.

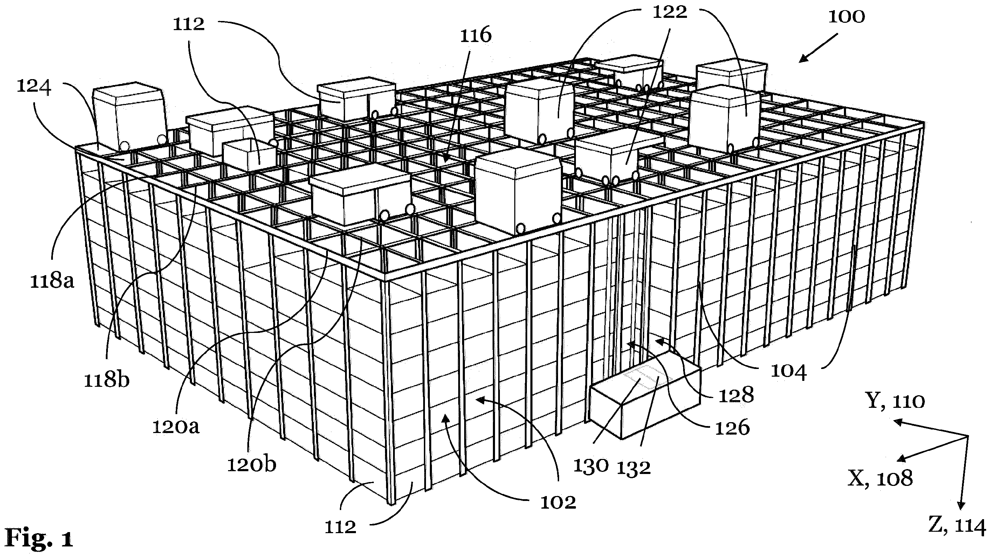

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape, and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts, or robots.

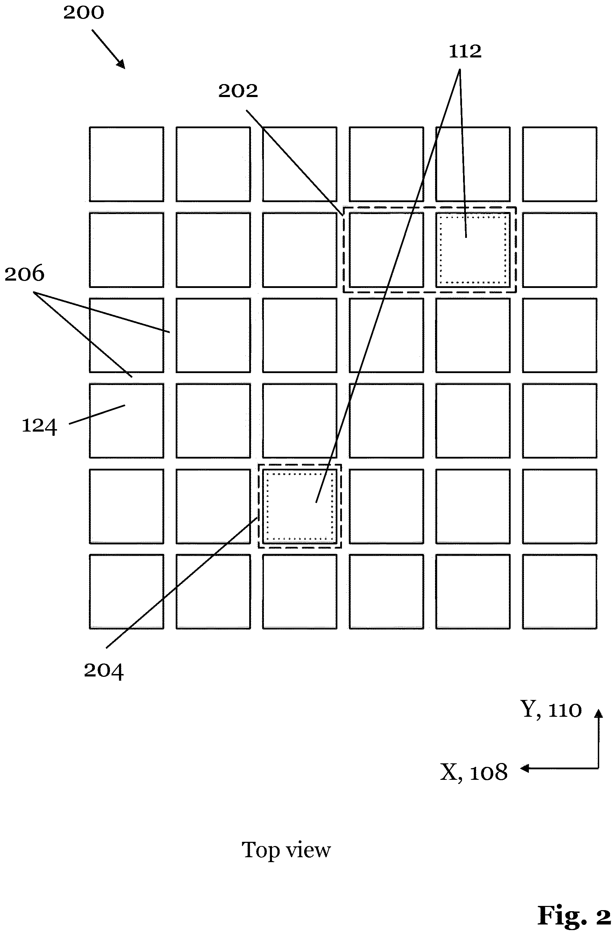

Referring to the embodiment shown in Fig. 2, the X-Y configuration 200 of the rail system 116 can be seen in more detail, together with robots 202, 204 of different types. The rail system 116 includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

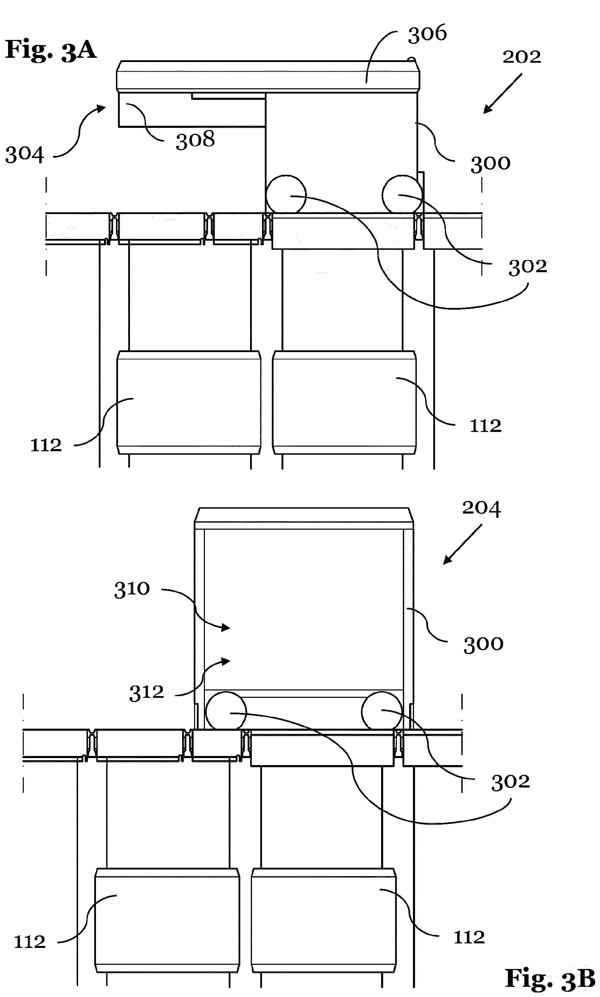

A first, 'cantilever' type of robot 202 is shown in more detail in Fig. 3A and includes a body 300, a set of wheels 302 and a lifting device 304. The body 300 contains operational equipment (not shown) for the robot 202 including drive, power, and control systems. The wheels 302 permit movement of the robot 202 in one of the X and Y directions 108, 110, an additional set of wheels (not visible in this view) permitting movement in the other of the X and Y directions 108, 110, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

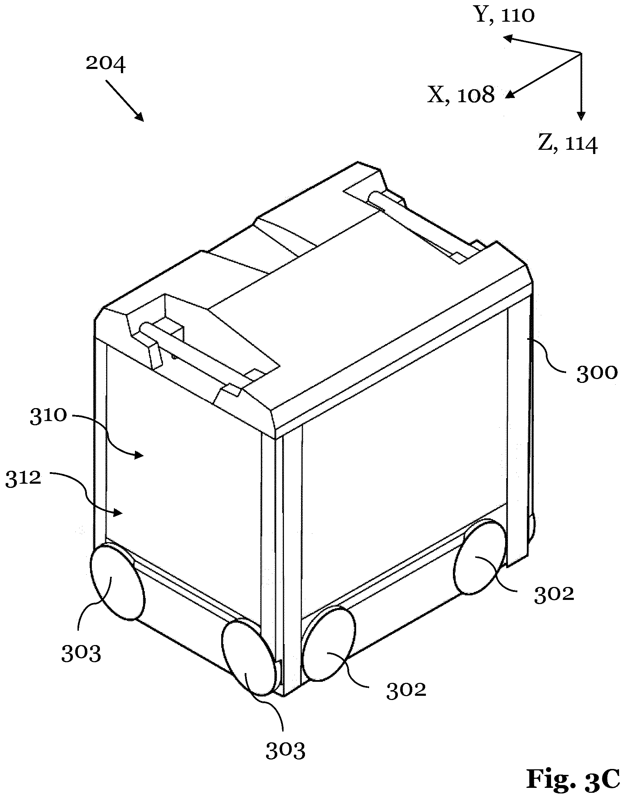

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions 108, 110 on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y directions 108, 110 across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

The robots or container-handling vehicles described throughout may be referred to as container-handling vehicles 122 but can be any of the described container-handling vehicles 202, 204 of different types. This applies to both the first and second container-handling vehicles 122, 2222.

The rails described with respect to Figs. 1-3C are interchangeable.

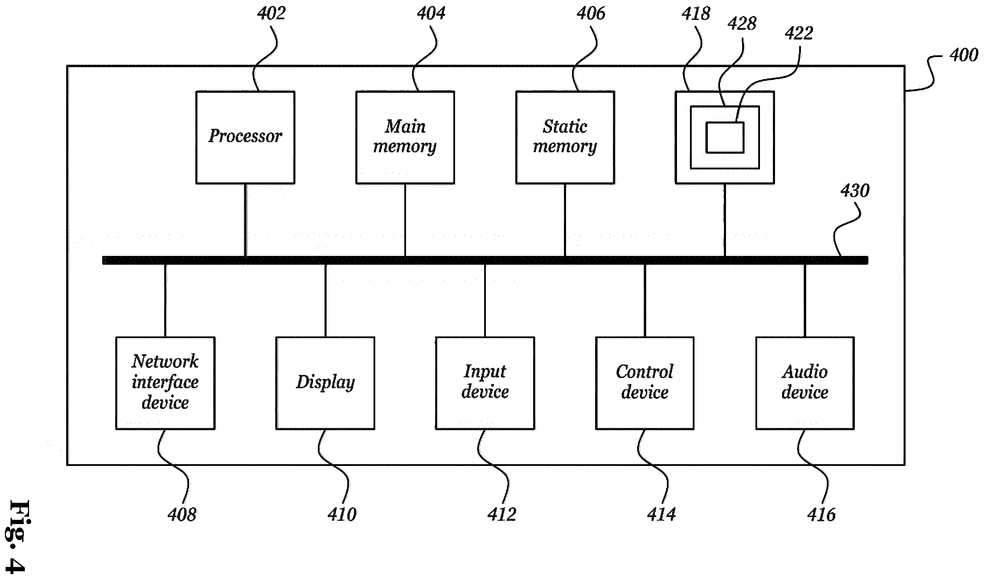

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

In operation, each bin 112 is given a unique identifier, which may be marked on the bin 112 using a computer-readable identifier (e.g., a barcode, quick-response code, or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips, and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary, as discussed above.

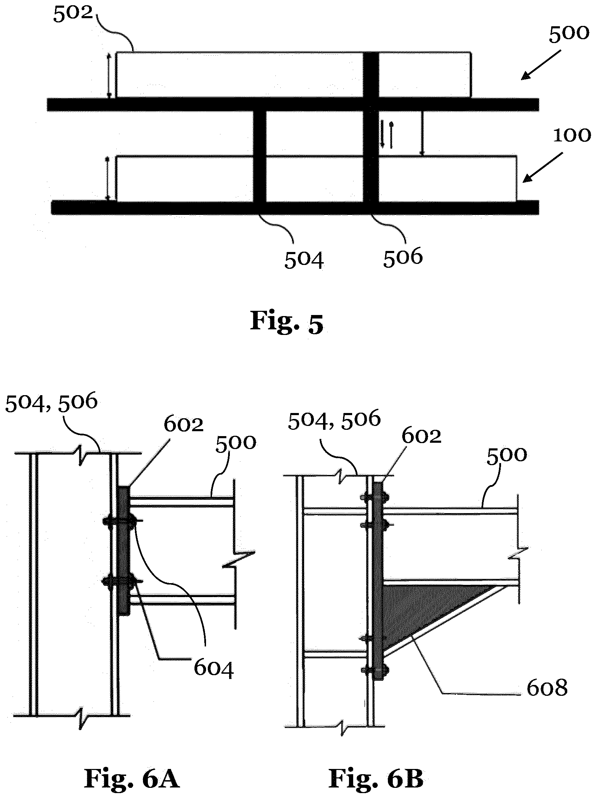

The automated storage and retrieval system of the present disclosure comprises the grid 100 as shown in Fig. 1, referred to as a first grid 100, having a first grid frame formed by first vertical storage columns 102 arranged to accommodate or for accommodating one or more first stacks of storage containers 112. As shown in Fig. 5, the system further comprises a second grid 500, disposed above the first grid 100, the second grid having a second grid frame formed by second vertical storage columns 502 arranged to accommodate or for accommodating one or more second stacks of storage containers. The second grid 500 may be disposed adjacently above, directly above, on top of, or directly on top of the first grid 100, or displaced therefrom, for instance vertically.

Thes second storage columns are a plurality of generally rectilinear, adjacent vertical columns formed between vertical frame members and extending in the X and Y directions 108, 110. The grid elements may be fabricated of any appropriate material; for example, the frame members may be formed of extruded aluminium. Storage containers 112 are stackable on top of each other, preferably in a self-supporting manner, in the Z direction 114 in the columns, forming a storage volume of storage cells for respective storage containers 112 extending in the X, Y and Z directions 108, 110, 114.

A rail system 2016 or network is formed on top of the second grid 500 and comprises pairs of vehicle rails or tracks 2018a, 2018b and 2020a, 2020b, respectively extending in the X and Y directions 108, 110. Second robotic container-handling vehicles, or second robots 2222, which can be of a range of size, shape, and function, are provided and configured to run on the rails 2018, 2020 and to transport storage containers 112 in both the X and Y directions 108, 110. The second container-handling vehicles 2222 are additionally configured to lift and lower storage containers 112 from/into the second columns 502 in the Z direction 114, the storage containers 112 optionally being guided by the vertical frame members. The second container-handling vehicles 2222 access the storage containers 112 via access openings above the columns and formed between the rails 2018, 2020.

The first and second grids each comprise a rail system 116, 2016 having a first set of parallel rails 118a, 118b, 2018a, 2018b arranged in a horizontal plane and extending in a first direction 108, and a second set of parallel rails 120a, 120b, 2020a, 2020b arranged in the horizontal plane and extending in a second direction 110 which is orthogonal to the first direction 108. The first grid 100 comprises at least one first container-handling vehicle 122 that is configured to move along the two sets of parallel rails 118, 120 of the rail system 112 of the first grid 100. The second grid 500 comprises at least one second container-handling vehicle 2222 that is configured to move along the two sets of parallel rails 2018, 2020 of the rail system 2016 of the second grid 500. The first and second grids may be structurally separate from one another. The at least one first container-handling vehicle 122 can move along a top of the rail system 116 of the first grid 100, preferably due to the first and second grids being structurally separate from one another.

The first and second sets of rails 118, 120, 2018, 2020 of each rail system 116, 2016 form a grid pattern in the horizontal plane comprising a plurality of adjacent grid cells, each comprising a grid opening defined by a pair of opposed rails of the first set of rails 118, 2018 and a pair of opposed rails of the second set of rails 2018, 2020. The storage columns of the first grid 100 and second grid 500 are arranged beneath the associated rail system 116, 2016.

Some columns may be used for alternative purposes than storage container storage. For example, port columns comprise port or access columns allowing transfer of a storage container 112 in and/or out of the second grid 500. The port columns may be described in the same way as the port columns 126, 128 of Fig. 1.

Storage containers 112 can be transported along the top of the second grid 500 to and/or from a port column by second container-handling vehicles 2222, and from a port to a location outside the second grid 500, which may be an access station (not shown) for processing of the storage container 112 or its contents, such as a picking station for adding content to, or removing content from, the storage container 112.

As described in relation to Fig. 1, the storage containers 112 may be transported to a port of another grid on the same or another level, or to an external facility. Transport of storage containers 112 to and from ports may be by any appropriate means (not shown) including conveyors, transport vehicles, lifts, or robots. With reference to Fig. 5, the storage containers 112 may be transported from the first grid 100 to the second grid 500, and from the second grid 500 to the first grid 100 via at least one beam. The at least one beam is a vertical structure, otherwise described as a vertical beam 504, 506.

The at least one vertical beam 504, 506 is arranged as a storage column. Here, the at least one first container-handling vehicle 122 is configured to raise at least one storage container 112 within the storage column of the first grid 100 and/or lower at least one storage container 112 within the storage column of the first grid 100.

The at least one vertical beam 504, 506 is arranged as a port column. Here, the at least one second container-handling vehicle 2222 is configured to raise at least one storage container 112 from the first grid 100 to the second grid 500 via the port column and/or lower at least one storage container from the second grid 500 to the first grid 100 via the port column. Raising and/or lowering at least one storage container may be described as being raised vertically.

The system further comprises the at least one vertical beam 504, 506 and Fig. 5 shows the system with first and second vertical beams 504, 506. The system may comprise one or more vertical beams of any configuration, such as the first vertical beam 504, the second vertical beam 506, or both first and second vertical beams 504, 506.

The first vertical beam 504 is disposed in the first grid 100. The first vertical beam 504 is configured to structurally support the first grid 100. In one aspect, the first vertical beam 504 is configured to structurally support the second grid 500, or more specifically, a floor or base of the second grid 500. The first vertical beam 504 vertically traverses the first grid 100. The first grid 100 may comprise the first vertical beam 504, or more specifically, the first grid frame may comprise the first vertical beam 504. The first vertical beam 504 is, optionally continuously (unbroken, or one-piece), disposed from (running from) a base of the first grid 100 or first grid frame to a base or floor of the second grid 500 or second grid frame. In other words, the first vertical beam 504 extends, optionally continuously, from a base of the first grid 100 or first grid frame to a base of the second grid 500 or second grid frame. The first vertical beam 504 may be arranged to connect the first and second grids. The first vertical beam 504 is arranged as a first vertical beam column. The first vertical beam 504 may be arranged as a storage column in the first grid 100.

The second vertical beam 506 is disposed in the first and second grid. The second vertical beam 506 is configured to structurally support the first grid 100. The second vertical beam 506 is configured to structurally support the second grid 500, or more specifically, a floor or base of the second grid 500. The second vertical beam 506 vertically traverses the first and second grids. The first and second grids 100, 500 may comprise the second vertical beam 506, or more specifically, the first and second grid frames may comprise the second vertical beam 506. The second vertical beam 506 is, optionally continuously, disposed from a base of the first grid 100 or first grid frame to a top of the second grid 500 or second grid frame. In other words, the second vertical beam 506 extends, optionally continuously, from a base of the first grid 100 or first grid frame to a top of the second grid 500 or second grid frame. The second vertical beam 506 may be arranged to connect the first and second grids. The second vertical beam 506 is arranged as a second vertical beam column. The second vertical beam 506 may be arranged as a storage column. The second vertical beam 506 may be arranged as a port column for transit of storage containers between the first and second grids.

The system may comprise a third vertical beam disposed in the second grid 500 (not shown). The third vertical beam may be configured to structurally support the first grid 100. The third vertical beam may be configured to structurally support the second grid 500, or more specifically, a floor or base of the second grid 500. The third vertical beam vertically traverses the second grid 500. The second grid 500 may comprise the third vertical beam, or more specifically, the second grid frame may comprise the third vertical beam. The third vertical beam is, optionally continuously, disposed from a top of the first grid 100 or first grid frame to a top of the second grid 500 or second grid frame. In other words, the third vertical beam extends, optionally continuously, from a top of the first grid 100 or first grid frame to a top of the second grid 500 or second grid frame. The third vertical beam may be arranged to connect the first and second grids. The third vertical beam is arranged as a third vertical beam column. The third vertical beam may be arranged as a storage column in the second grid 500. The third vertical beam may be arranged as a port column for transit of storage containers between the first and second grids.

The system may comprise any combination of first, second, and third vertical beams. For example, the system may comprise a plurality of first vertical beams 504 and a plurality of second vertical beams 506, or any other combination of first, second, and third vertical beams.

A base of the first vertical beam 504 may be bolted, fastened, or otherwise connected, attached, secured, or fixed to a base (or floor) of the first grid 100 or first grid frame, or floor on which the first grid or first grid frame are provided. A top of the first vertical beam 504 may be bolted, fastened, or otherwise connected, attached, secured, or fixed to a base (or floor) of the second grid 500 or second grid frame, or floor on which the first grid or first grid frame are provided.

A base of the second vertical beam 506 may be bolted, fastened, or otherwise connected, attached, secured, or fixed to a base (or floor) of the first grid 100 or first grid frame. A top of the second vertical beam 506 may be bolted, fastened, or otherwise connected, attached, secured, or fixed to a top of the second grid 500 or second grid frame.

A base of the third vertical beam may be bolted, fastened, or otherwise connected, attached, secured, or fixed to a top of the first grid 100 or first grid frame. A top of the third vertical beam may be bolted, fastened, or otherwise connected, attached, or fixed to a top of the second grid 500 or second grid frame.

Figs. 6A and 6B show a vertical beam 504, 506 fixed to a grid frame, and more specifically, bolted and fastened to the grid frame using a plate (supporting and /or attachment member). The system may comprise a plate to attach the vertical beam 504, 506 to the base of the second grid 500 or second grid frame. The plate is configured to be attached using at least one bolt and/or at least one fastening, and optionally at least one flange. The fixing of the vertical beam 504, 506 to the grid frame provides structural load bearing capacity to hold the base of the second grid 500. This is advantageous in use with the first or second vertical beams 504, 506.

Referring to Fig. 6A, the vertical beam 504, 506 is attached to the grid frame using a plate 602 (or end plate) and two fastening means 604. The fastening means 604 shown comprises two sets of bolts and flanges but other fastening means are possible, for example, two sets of bolts and nuts. Any number of fastening means 604 maybe used to attach the vertical beam 504, 506 to the grid frame using a plate. This configuration may be used with a second vertical beam 506.

Referring to Fig. 6B, the vertical beam 504, 506 is attached to the grid frame using a plate 602 (or end plate) and four fastening means 604. The plate 602 shown is an extended plate. The fastening means 604 shown comprises four sets of bolts and flanges, but other fastening means are possible, for example, four sets of bolts and nuts. Any number of fastening means 604 may be used to attach the vertical beam 504, 506 to the grid frame using a plate 602. This configuration may be used with a second vertical beam 506. A bracket 608 is diagonally connected between the vertical beam 504, 506 and the grid, or more specifically, between the plate 602 attached to the vertical beam 504, 506 and the base of the second grid 500 or second grid structure. The bracket 608 minimises disrupting storage container movement inside of the vertical beam 504, 506 when a storage container is raised from within or lowered into the vertical beam 504, 506.

In any example, instead of using bolts, flanges, nuts, or otherwise, the plate may be attached in other ways such as via welding or specialized bolts to minimise disrupting storage container movement inside of the vertical beam 504, 506 when a storage container is raised from within or lowered into the vertical beam 504, 506.

As described, the at least one vertical beam 504, 506 may extend between and connect the first and second grids 100, 500 and may be disposed from a base of the first grid 100 to a top of the second grid 500. The at least one vertical beam 504, 506 may comprise a column. The at least one vertical beam 504, 506 is one of: a C beam, H beam, HSS beam, I beam, L beam, or T beam. The at least one vertical beam 504, 506 maybe fabricated of any appropriate material; for example, the vertical beam 504, 506 may be formed of steel, or more specifically, a carbon or low-alloy steel, rolled steel, or recycled steel, reinforced concrete, timber, or fibre-reinforced polymeric materials. The column may comprise two or three at least partially enclosed sides and an opening. The column may comprise an enclosed side, two at least partially enclosed sides, and an opening. The column may comprise two enclosed sides, an at least partially enclosed side, and an opening. The column may comprise two or three enclosed sides and an opening.

The at least one vertical beam 504, 506 may comprise a bracket to accommodate at least one storage container or a stack of storage containers. The bracket may be mounted to or fixed to inner sides of the at least one vertical beam 504, 506.

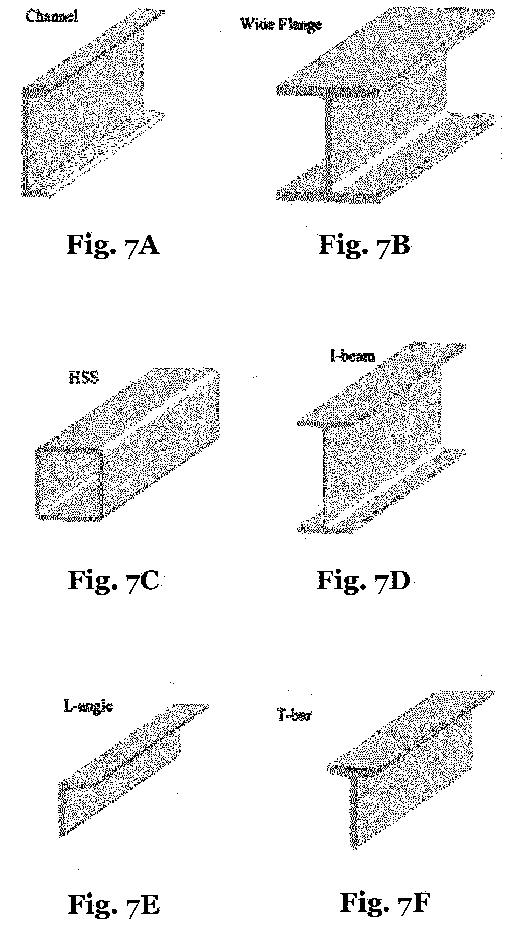

Fig. 7A shows a C beam 504, 506 (or C-shaped beam, or channel, or parallel flange channel) having three surfaces. The three surfaces form a C-shape. The C beam 504, 506 comprises a first surface, a second surface and a third surface. Each of the first, second, and third surfaces have first and second vertical edges and first and second horizontal edges. The first vertical edge of the first surface is perpendicularly joined to the second vertical edge of the second surface. The first vertical edge of the second surface perpendicularly joined to the second vertical edge of the third surface. The first surface is parallel to the third surface. The second surface may be described as an enclosed side, and the first and third surfaces may be described as enclosed sides or partially enclosed sides. The C beam 504, 506 may comprise a column 504, 506 having an enclosed side, two at least partially enclosed sides and an unenclosed side (or an opening). The system may comprise at least one vertical C beam 504, 506 arranged as a column 504, 506 having an enclosed side, two at least partially enclosed sides and one unenclosed side.

Fig. 7B shows a H beam 504, 506 (or wide flange) having three surfaces. The three surfaces form a H-shape. The H beam 504, 506 comprises a first surface, a second surface, and a third surface. Each of the first, second and third surfaces have first and second vertical edges and first and second horizontal edges. The first vertical edge of the second surface is perpendicularly joined along an (approximate) vertical midpoint, or centre, of the first surface. The second vertical edge of the second surface is perpendicularly joined along an (approximate) vertical midpoint, or centre, of the third surface. The vertical midpoint or centre is a central axis extending along a vertical length of the first or third surface. The first surface is parallel to the third surface. The first and third surfaces may be described as enclosed sides or partially enclosed sides. The second surfaced may be described as an enclosed side. The H beam 504, 506 may comprise or be arranged as two columns, each having an enclosed side, two at least partially enclosed sides and an unenclosed side. The first surface is separated by the second surface to form an at least partially enclosed side for each of the columns. In other words, a first at least partially enclosed side of each column is a same surface or shares a surface, i.e., the first surface. Each side of the second surface forms an enclosed side for each of the columns. In other words, the enclosed side of each column is a same surface or shares a surface, i.e., the second surface. The third surface is separated by the second surface to form an at least partially enclosed side for each of the columns. In other words, a second at least partially enclosed side of each column is a same surface or shares a surface, i.e., the third surface. The system may comprise at least one vertical H beam 504, 506 arranged as two columns, each having an enclosed side, two at least partially enclosed sides and one unenclosed side (or opening).

Fig. 7C shows a HSS beam 504, 506 having four surfaces. The four surfaces form a rectangular or square shape. The HSS beam 504, 506 comprises a first surface, a second surface, a third surface, and a fourth surface. Each of the first, second, third, and fourth surfaces have first and second vertical edges and first and second horizontal edges. The first vertical edge of the first surface is perpendicularly joined to the second vertical edge of the second surface. The first vertical edge of the second surface perpendicularly joined to the second vertical edge of the third surface. The first vertical edge of the third surface perpendicularly joined to the second vertical edge of the fourth surface. The first vertical edge of the fourth surface perpendicularly joined to the second vertical edge of the first surface. The first surface is parallel to the third surface. The second surface is parallel to the fourth surface. Each surface may be described as an enclosed side. At least one of the enclosed sides of the HSS beam 504, 506 may be modified to be arranged as an unenclosed side or an at least partially unenclosed side so that when the HSS beam 504, 506 comprises a column 504, 506, the column 504, 506 has at least two enclosed sides and at least one at least partially unenclosed side (or at least one opening). The system may comprise at least one vertical HSS beam 504, 506 arranged as a column 504, 506 having three enclosed sides and one at least partially unenclosed side.

Fig. 7D shows an I beam 504, 506 having three surfaces. The three surfaces form an I-shape. The I beam 504, 506 comprises a first surface, a second surface, and a third surface. Each of the first, second and third surfaces have first and second vertical edges and first and second horizontal edges. The first vertical edge of the second surface is perpendicularly joined along an (approximate) vertical midpoint, or centre, of the first surface. The second vertical edge of the second surface is perpendicularly joined along an (approximate) vertical midpoint, or centre, of the third surface. The vertical midpoint or centre is a central axis extending along a vertical length of the first or third surface. The first surface is parallel to the third surface. The first and third surfaces may be described as enclosed sides or partially enclosed sides. The second surfaced may be described as an enclosed side. The I beam 504, 506 may comprise or be arranged as two columns, each having an enclosed side, two at least partially enclosed sides and an unenclosed side. The first surface is separated by the second surface to form an at least partially enclosed side for each of the columns. In other words, a first at least partially enclosed side of each column is a same surface or shares a surface, i.e., the first surface. Each side of the second surface forms an enclosed side for each of the columns. In other words, the enclosed side of each column is a same surface or shares a surface, i.e., the second surface. The third surface is separated by the second surface to form an at least partially enclosed side for each of the columns. In other words, a second at least partially enclosed side of each column is a same surface or shares a surface, i.e., the third surface. The system may comprise at least one vertical I beam 504, 506 arranged as two columns, each having an enclosed side, two at least partially enclosed sides and one unenclosed side (or opening).

Fig. 7E shows an L beam 504, 506 having two surfaces. The two surfaces form an L-shape. The L beam 504, 506 comprises a first surface and a second surface. Each of the first and second surfaces have first and second vertical edges and first and second horizontal edges. The first vertical edge of the first surface is perpendicularly joined to the second vertical edge of the second surface. The first and second surfaces may be described as enclosed sides or partially enclosed sides. The L beam 504, 506 may comprise a column 504, 506 having two at least partially enclosed sides and two unenclosed sides. At least one of the unenclosed sides of the L beam 504, 506 may be modified to be arranged as an enclosed side or partially enclosed side so that when the L beam 504, 506 comprises a column 504, 506, the column 504, 506 has three at least partially enclosed sides and one unenclosed side (or opening). The system may comprise at least one vertical L beam 504, 506 arranged as a column 504, 506 having three at least partially enclosed sides and one unenclosed side (or opening).

Fig. 7F shows a T beam 504, 506 having two surfaces. The two surfaces form a T-shape. The T beam 504, 506 comprises a first surface and a second surface. Each of the first and second surfaces have first and second vertical edges and first and second horizontal edges. The first vertical edge of the second surface is perpendicularly joined along an (approximate) vertical midpoint, or centre, of the first surface. The vertical midpoint or centre is a central axis extending along a vertical length of the first surface. The first and second surfaces may be described as enclosed sides or partially enclosed sides. The T beam 504, 506 may comprise or be arranged as two columns, each having two at least partially enclosed sides and two unenclosed sides. The first surface is separated by the second surface to form an at least partially enclosed side for each of the columns. In other words, a first at least partially enclosed side of each column is a same surface or shares a surface, i.e., the first surface. Each side of the second surface forms an at least partially enclosed side for each of the columns. In other words, a second at least partially enclosed side of each column is a same surface or shares a surface, i.e., the second surface. At least one of the unenclosed sides of each of the columns comprised by the T beam 504, 506 may be modified to be arranged as an enclosed side or partially enclosed side so that when the T beam 504, 506 comprises two columns, the columns each have three at least partially enclosed sides and one unenclosed side (or opening). The system may comprise at least one vertical T beam 504, 506 arranged as two columns, each having three at least partially enclosed sides and one unenclosed side (or opening).

An X beam 504, 506 (not shown) has four surfaces. The four surfaces form an X-shape. The X beam 504, 506 comprises a first surface, a second surface, a third surface, and a fourth surface. Each of the first, second, third, and fourth surfaces have first and second vertical edges and first and second horizontal edges. The first vertical edges of each of the first, second, third, and fourth surfaces are joined so that each surface is perpendicular to an adjacent surface. The first, second, third, and fourth surfaces may be described as enclosed sides or partially enclosed sides. The X beam 504, 506 may comprise or be arranged as four columns, each having two at least partially enclosed sides and two unenclosed sides. At least one of the unenclosed sides of each of the columns comprised by the X beam 504, 506 may be modified to be arranged as an enclosed side or partially enclosed side so that when the X beam 504, 506 comprises four columns, the columns each have three at least partially enclosed sides and one unenclosed side (or opening). Two of the at least partially enclosed sides of each column is a same surface or shares a surface with two adjacent at least two partially enclosed sides. The system may comprise at least one vertical X beam 504, 506 arranged as four columns, each having three at least partially enclosed sides and one unenclosed side (or opening).

Generally, the at least one vertical beam 504, 506 comprises a column 504, 506 having three at least partially enclosed sides and an opening. The at least one vertical beam 504, 506 may comprise two columns, each column having three at least partially enclosed sides and an opening. The at least one vertical beam 504, 506 may comprise four columns, each column having three at least partially enclosed sides and an opening.

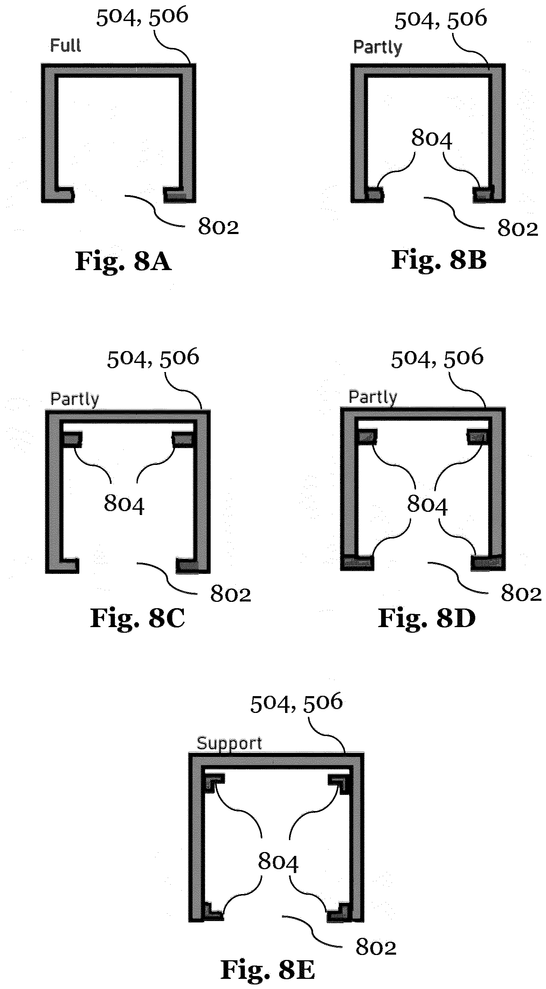

Figs. 8A-E show a top view of five examples of a vertical beam 504, 506 as a column 504, 506. The vertical beam 504, 506s shown can be any of the beams described. Fig. 8A shows a column 504, 506 having three enclosed sides and an opening 802 with partially enclosed edges. Fig. 8B shows a column 504, 506 having three enclosed sides and an opening 802 comprising two storage container guides 804 each attached to a vertical edge of a surface at the opening 802. Fig. 8C shows a column 504, 506 having three enclosed sides, an opening 802 with partially enclosed edges, and two storage container guides 804 each attached to an inner surface or inner corners of the column 504, 506. Figs. 8D and 8E each show a column 504, 506 having three enclosed sides, an opening 802 comprising two storage container guides 804 each attached to a vertical edge of a surface at the opening 802, and two storage container guides 804 each attached to an inner surface or inner corners of the column 504, 506. In the example of Fig. 8E, the storage container guides 804 are shaped to accommodate a storage container. The shape of the storage container guides 804 in Fig. 8E may be considered as right-angles.

The storage container guides 804 attached at each opening 802 may be configured to at least partially close the opening 802. The storage container guides 804 may comprise at least one of: a flap, a lip, a door, or a barrier-type member. The storage container guide 804 may be a guiding means. Any of the flap, lip, or door may be a swing flap, swing lip, swing door, or swing barrier having a closed rest state. The storage container guides 804 may be mechanical or electrical by use of, for example, a motion sensor.

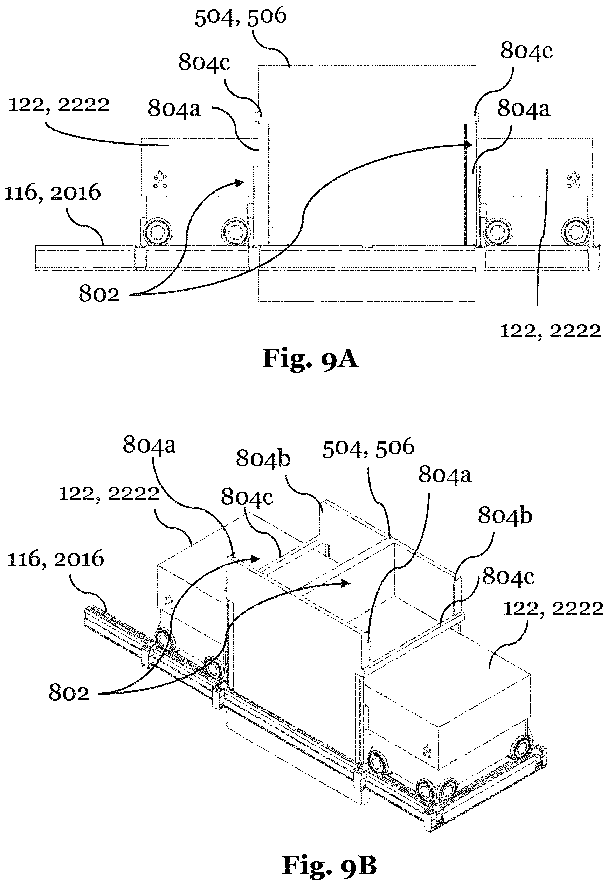

Figs. 9A-23H comprise a section of a rail system 116, 2016 to be arranged on either the first or second grid. In practice, the system comprises first and second grids, and a rail system 116, 2016 having a first set of parallel rails 118a, 118b, 2018a, 2018b arranged in a horizontal plane and extending in a first direction 108, and a second set of parallel rails 120a, 120b, 2020a, 2020b arranged in the horizontal plane and extending in a second direction 110 which is orthogonal to the first direction 108. The first grid 100 may comprise at least one first container-handling vehicle 122 that is configured to move along the two sets of parallel rails 118, 120 of the rail system 116 of the first grid 100. The second grid 500 may comprise at least one second container-handling vehicle 2222 that is configured to move along the two sets of parallel rails 2018, 2020 of the rail system 2016 of the second grid 500.

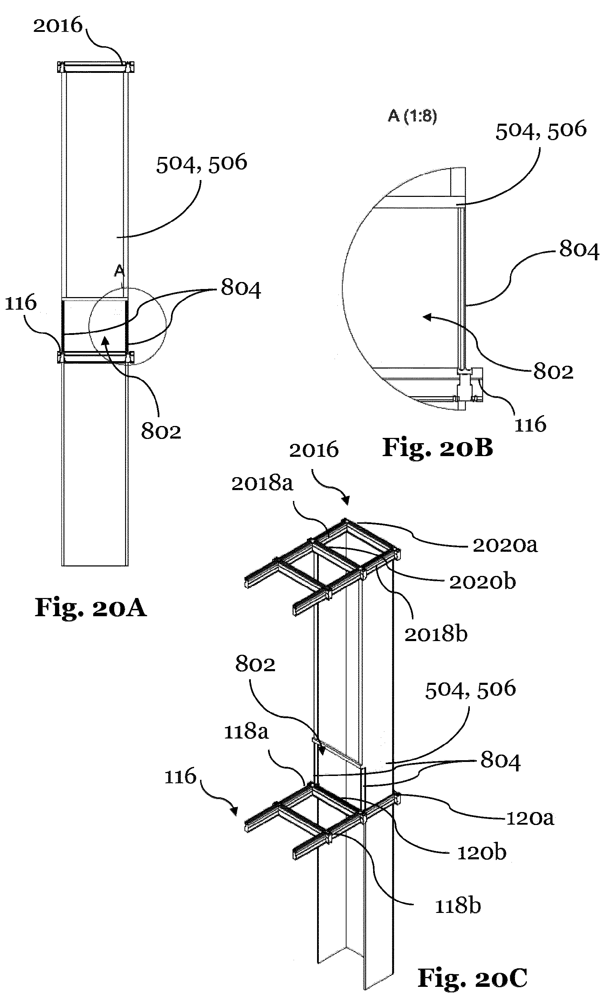

Referring to Figs. 9A-19C, only a section of the at least one vertical beam 504, 506 is shown. The at least one vertical beam 504, 506 is disposed in at least the first grid 100 and configured to structurally support the grid, as shown in Figs. 20A-24B. The at least one vertical beam 504, 506, or more specifically the opening 802 of the at least one vertical beam 504, 506, may be accessible by the first container-handling vehicle 122 via the opening 802 when the at least one vertical beam 504, 506 is disposed in the first grid 100, and preferably, to vertically traverse the first grid 100. The at least one vertical beam 504, 506, or more specifically the opening 802, may be accessible by the first and second container-handling vehicles 122, 2222 via the opening 802 when the at least one vertical beam 504, 506 is disposed in the second grid 500, and preferably, to vertically traverse the first and second grids.

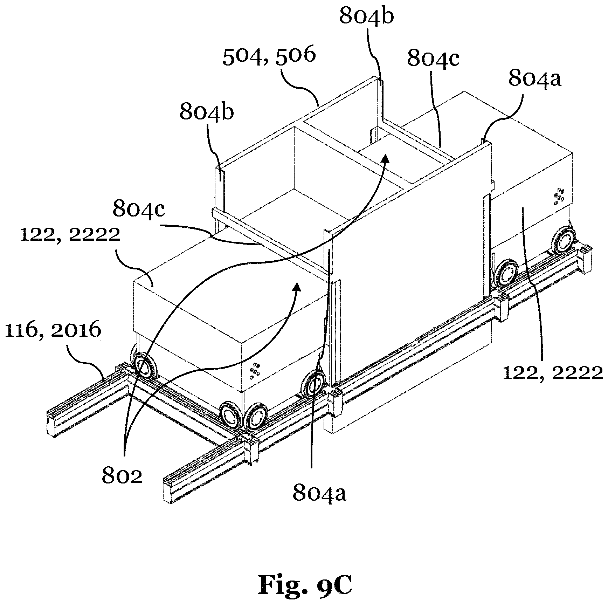

Figs. 9A-C show a first example of a vertical H beam 504, 506 extending through a section of a rail system 116, 2016. Fig. 9A is a front view, Fig. 9B is a front right perspective view, and Fig. 9C is a front left perspective view of the vertical H beam 504, 506 extending through the section of a rail system 116, 2016. The configuration of the vertical H beam 504, 506 is as described above in relation to Fig. 7B, where the system comprises one vertical H beam 504, 506 arranged as two columns, each having three enclosed side and an opening 802. The opening 802 of each column comprises partially enclosed edges, or first, second, and third storage container guides 804a, 804b, 804c. The first and second storage container guides 804a, 804b are each attached to a vertical edge of a surface at the opening 802. The third storage container guide 804 is attached to both of the vertical edges of the surfaces at the opening 802. A container-handling vehicle 122, 2222 is shown within each column. The container-handling vehicles 122, 2222 are configured to move along the two sets of parallel rails 118, 120, 2018, 2020 of the rail system 116, 2016 of grid. The third storage container guide 804c forms a bar above each container-handling vehicle 122, 2222.

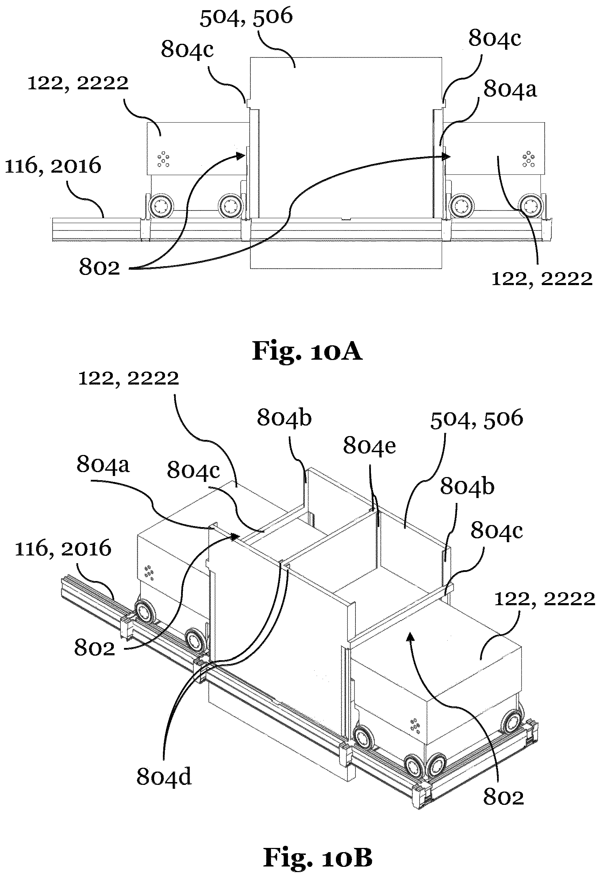

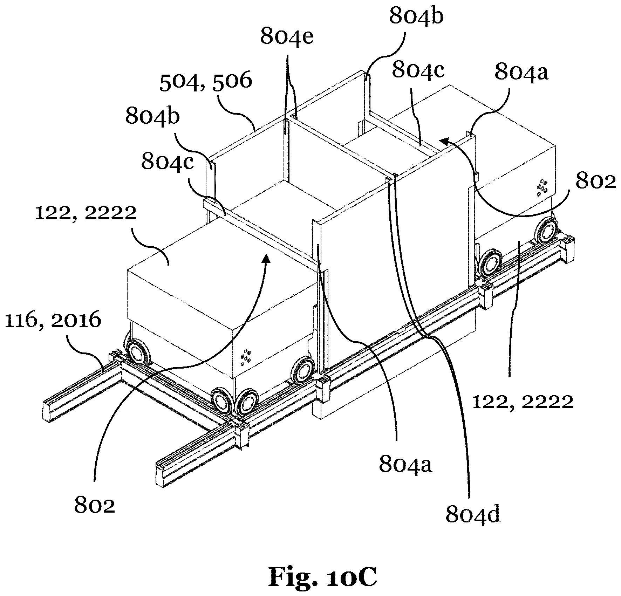

Figs. 10A-C show a second example of a vertical H beam 504, 506 extending through a section of a rail system 116, 2016. Fig. 10A is a front view, Fig. 10B is a front right perspective view, and Fig. 10C is a front left perspective view of the vertical H beam 504, 506 extending through the section of a rail system 116, 2016. The configuration of the vertical H beam 504, 506 is as described above in relation to Fig. 7B, where the system comprises one vertical H beam 504, 506 arranged as two columns, each having three enclosed side and an opening 802. The opening 802 of each column comprises partially enclosed edges, or first, second, and third storage container guides 804a, 804b, 804c. The first and second storage container guides 804a, 804b are each attached to a vertical edge of a surface at the opening 802. The third storage container guide 804c is attached to both of the vertical edges of the surfaces at the opening 802. The vertical H beam 504, 506 further comprises fourth and fifth storage container guides 804d, 804e each attached to inner corners of the vertical H beam 504, 506 along the second surface forming an enclosed side for each of the columns. A container-handling vehicle 122, 2222 is shown within each column. The container-handling vehicles 122, 2222 are configured to move along the two sets of parallel rails 118, 120, 2018, 2020 of the rail system 116, 2016 of grid. The third storage container guide 804c forms a bar above each container-handling vehicle 122, 2222.

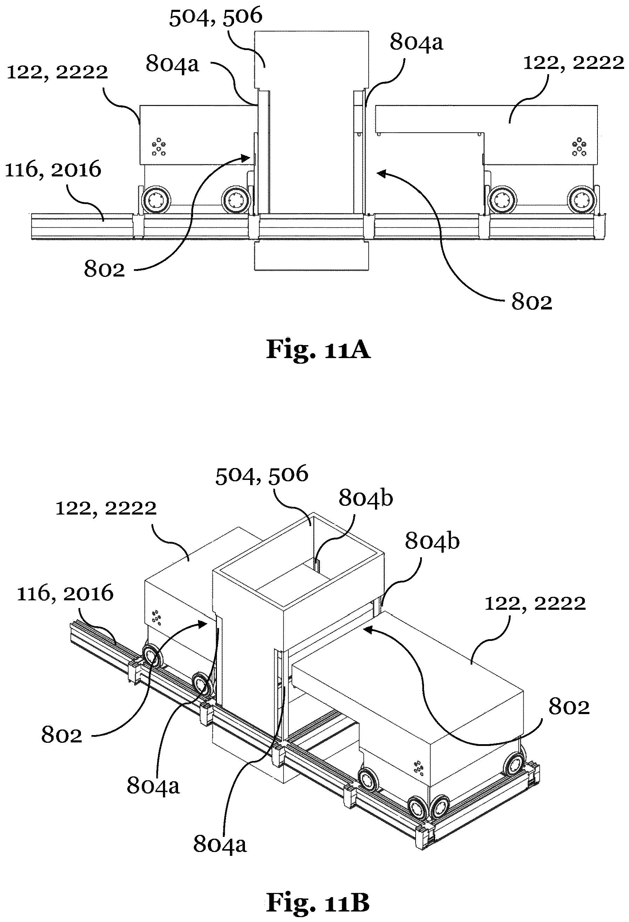

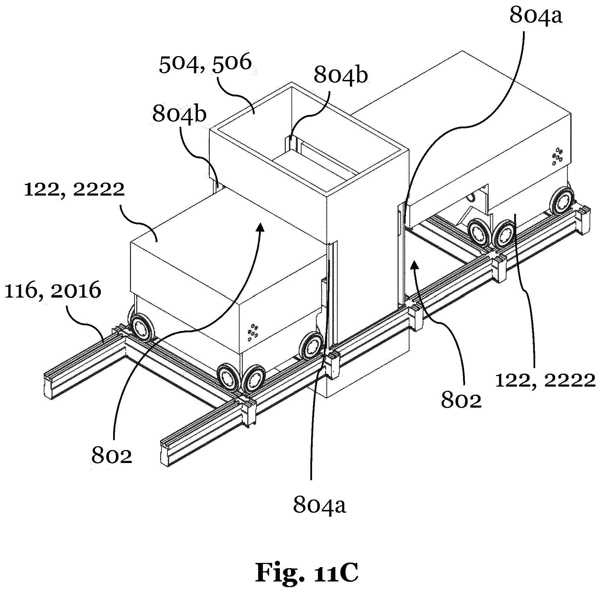

Figs. 11A-C show an example of a vertical HSS beam 504, 506 extending through a section of a rail system 116, 2016. Fig. 11A is a front view, Fig. 11B is a front right perspective view, and Fig. 11C is a front left perspective view of the vertical HSS beam 504, 506 extending through the section of a rail system 116, 2016. The configuration of the vertical HSS beam 504, 506 is as described above in relation to Fig. 7B, where the system comprises one vertical HSS beam 504, 506 arranged as a column 504, 506 having two enclosed sides and two opening 802s. The two openings 802a, 802b are opposite on another. Each opening 802 comprises partially enclosed edges, or first and second storage container guides 804a, 804b. The first and second storage container guides 804a, 804b are each attached to a vertical edge of a surface at the opening 802. Two container-handling vehicles 122, 2222 are shown wherein a container-handling vehicle 122, 2222 is within the column 504, 506 and an additional container-handling vehicle 122, 2222 is adjacent to the column 504, 506. The container-handling vehicles 122, 2222 are configured to move along the two sets of parallel rails 118, 120, 2018, 2020 of the rail system 116, 2016 of grid. The column 504, 506 can accommodate only one container-handling vehicle 122, 2222 from either opening 802. A container-handling vehicle 122, 2222 may access the column 504, 506 by either of the two opposite openings 802a, 802b.

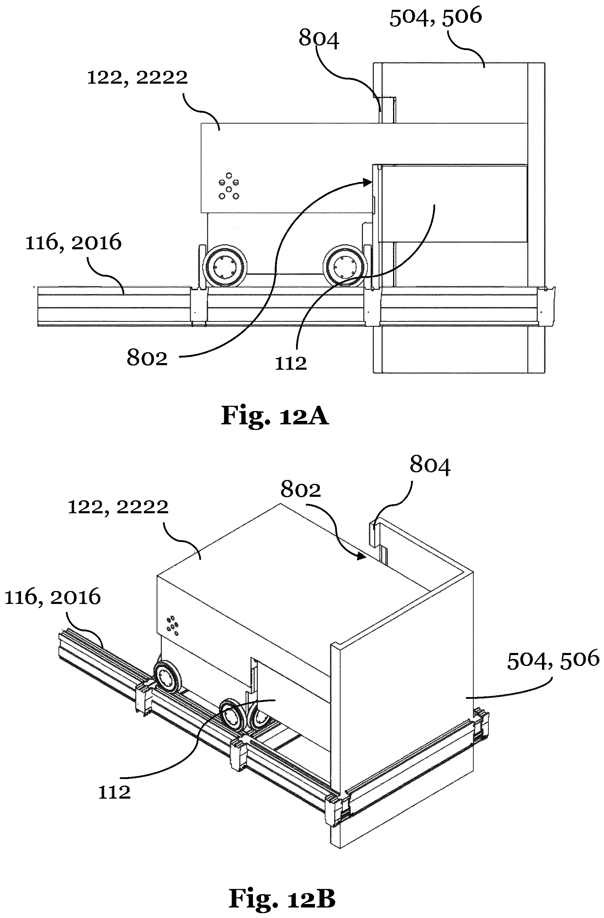

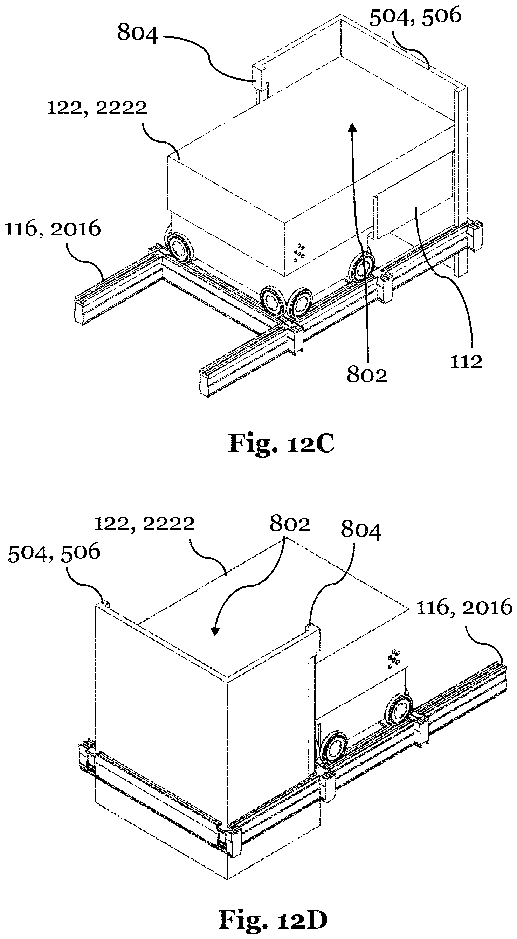

Figs. 12A-D show an example of a vertical L beam 504, 506 extending through a section of a rail system 116, 2016. Fig. 12A is a front view, Fig. 12B is a front right perspective view, Fig. 12C is a front left perspective view, and Fig. 12D is a back left perspective view of the vertical L beam 504, 506 extending through the section of a rail system 116, 2016. The configuration of the vertical L beam 504, 506 is as described above in relation to Fig. 7E, where the system comprises one vertical L beam 504, 506 arranged as a column 504, 506 having two enclosed sides, one partially enclosed side, and an opening 802. The opening 802 comprise a partially enclosed edge, or a first storage container guide 804. The first storage container guide 804 is attached to a vertical edge of a surface at the opening 802. A container-handling vehicle 122, 2222 engaged with a storage container is shown within the column 504, 506. The container-handling vehicle 122, 2222 is configured to move along the two sets of parallel rails 118, 120, 2018, 2020 of the rail system 116, 2016 of grid.

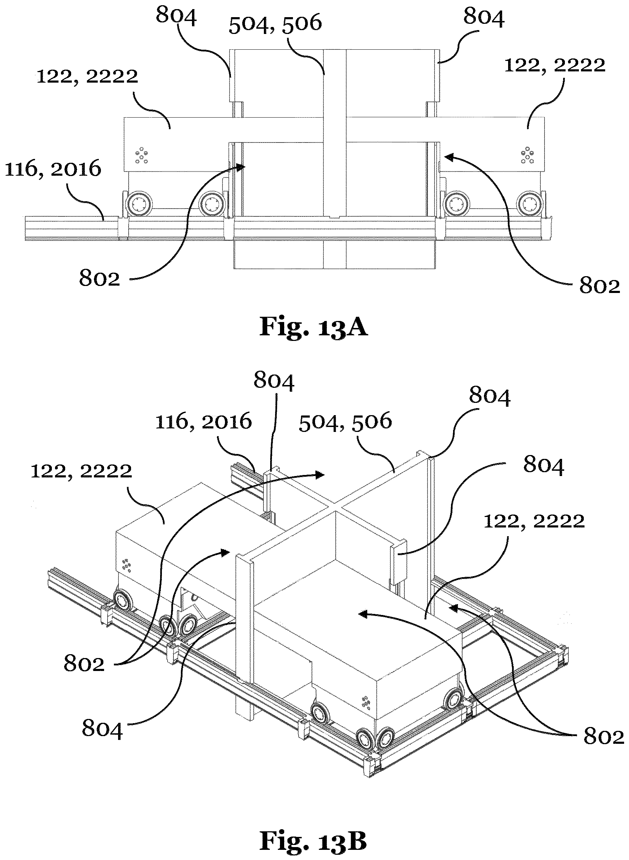

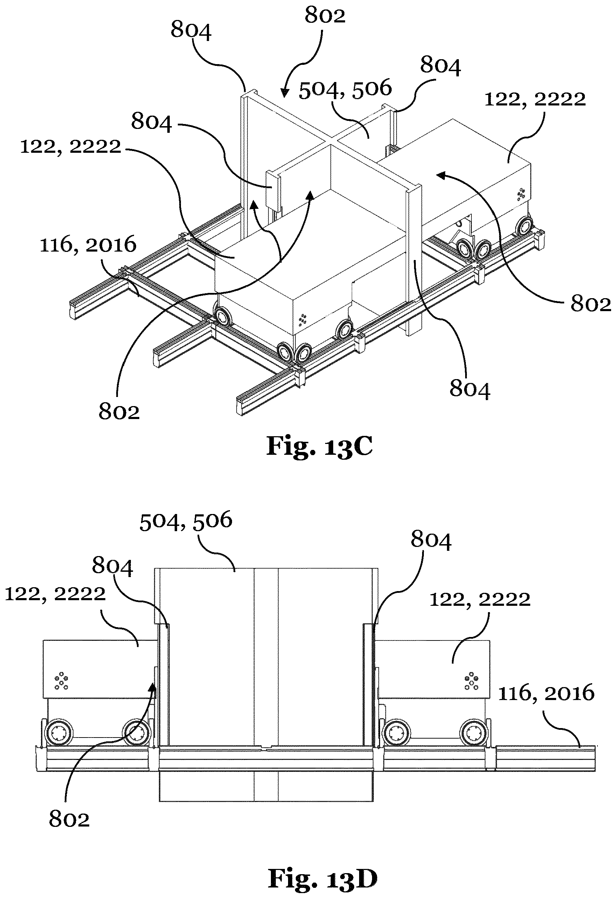

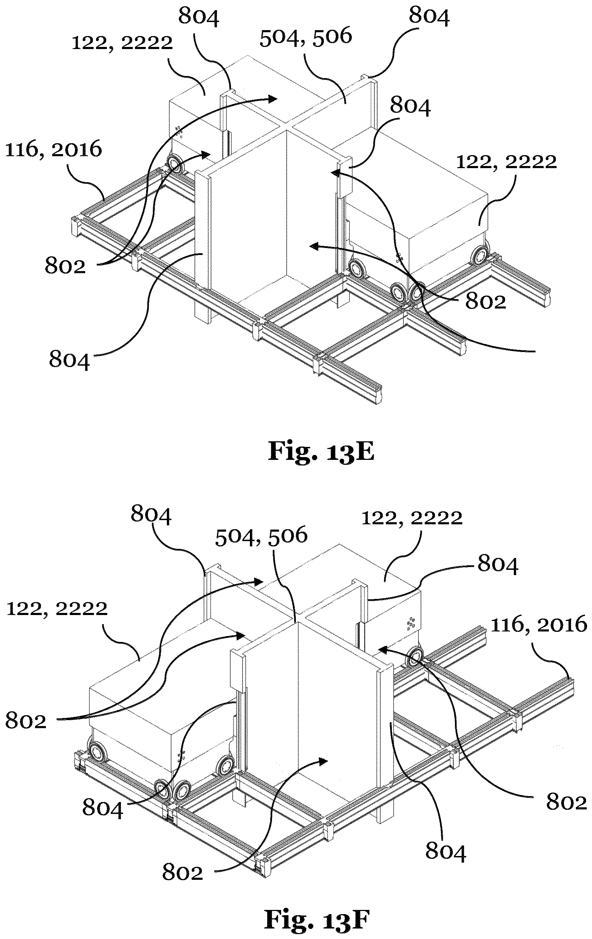

Figs. 13A-F show a first example of a vertical X beam 504, 506 extending through a section of a rail system 116, 2016. Fig. 13A is a front view, Fig. 13B is a front right perspective view, Fig. 13C is a front left perspective view, Fig. 13D is a back view, Fig. 13E is a back right perspective view, and Fig. 13F is a back left perspective view of the vertical X beam 504, 506 extending through the section of a rail system 116, 2016. The configuration of the vertical X beam 504, 506 is as described above, where the system comprises one vertical X beam 504, 506 arranged as four columns, each having two enclosed sides, one partially enclosed side and an opening 802. The opening 802 of each column comprises a partially enclosed edge, or a first storage container guide 804. The first storage container guides 804 is attached to a vertical edge of a surface at the opening 802. A container-handling vehicle 122, 2222 is shown within two opposite columns. The container-handling vehicles 122, 2222 are configured to move along the two sets of parallel rails 118, 120, 2018, 2020 of the rail system 116, 2016 of grid.

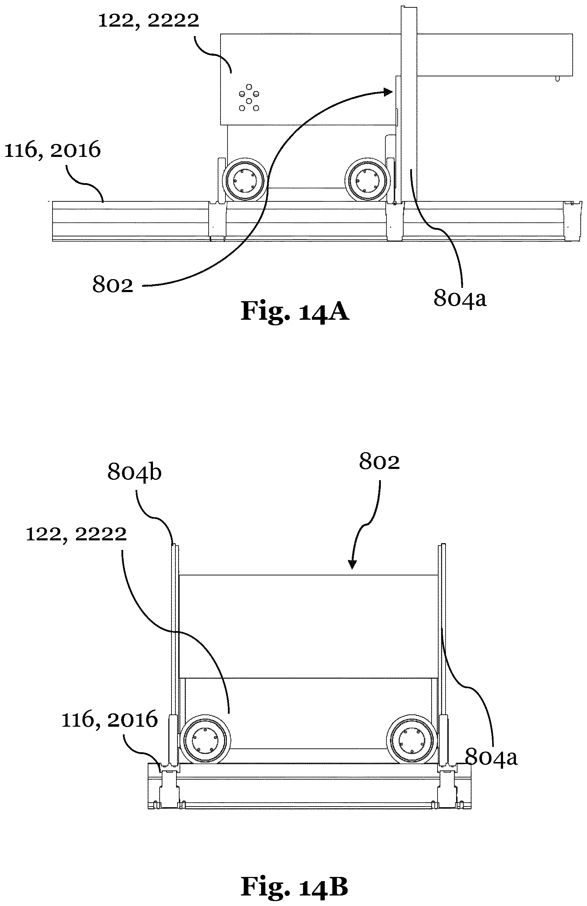

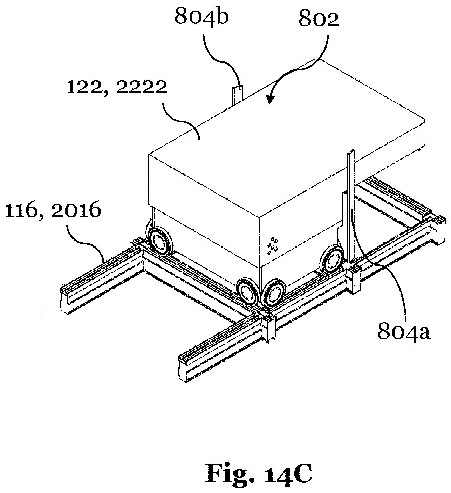

Figs. 14A-C show a first example of a column 504, 506 comprising an opening 802 having storage container guides 804a, 804b. Fig. 14A is a front view, Fig. 14B is a left view, and Fig. 14C is a front left perspective view of the first example having storage container guides 804a, 804b that are open. The vertical beam is not shown in Figs. 14A-C. The opening 802 comprises first and second storage container guides 804a, 804b. The storage container guides 804a, 804b may be described as lips or flaps. The first and second storage container guides 804a, 804b are each configured to be attached to respective or separate enclosed sides adjacent to or at the opening 802. In other words, the first and second storage container guides 804a, 804b are each configured to be attached to respective or separate vertical edges of enclosed sides adjacent to or at the opening 802. The first and second storage container guides 804a, 804b are in an open state, or open, or opened. The opening 802 maybe described as in an open state, or open, or opened. The column 504, 506 is accessible through or via the opening 802 when the storage container guides 804a, 804b are open. The storage container guides 804a, 804b maybe opened when a container-handling vehicle 122, 2222 moves into the column 504, 506 through the opening 802. A container-handling vehicle 122, 2222 is shown on top of a section of a rail system 116, 2016. The container-handling vehicle 122, 2222 is shown within the column 504, 506, and more specifically, through the opening 802 of the column 504, 506. The storage container guides 804 are configured to be open when the container-handling vehicle 122, 2222 is engaged with the storage container guides 804a, 804b.

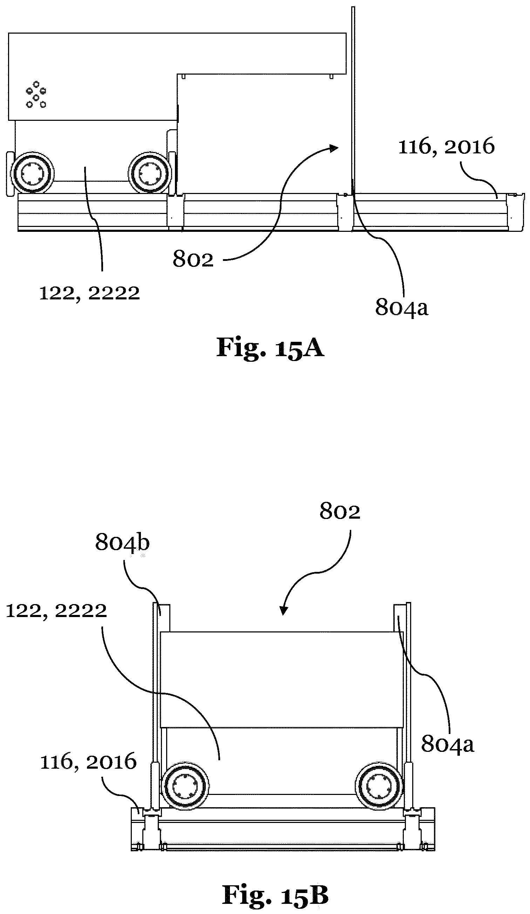

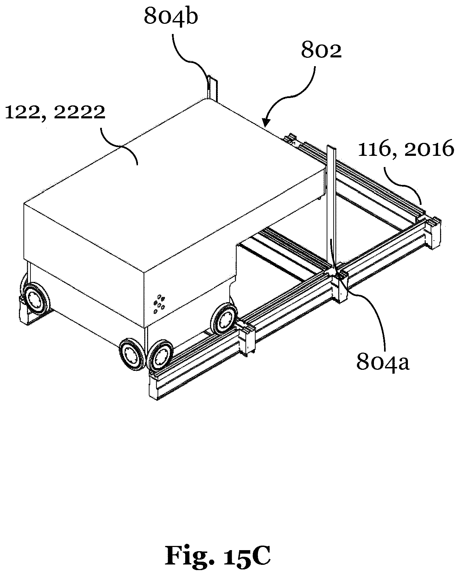

Figs. 15A-C show the first example of Figs. 14A-C having the storage container guides 804a, 804b that are closed. Fig. 15A is a front view, Fig. 15B is a left view, and Fig. 15C is a front left perspective view of the first example having storage container guides 804a, 804b that are closed. The first and second storage container guides are in a closed state or closed. The column 504, 506 is inaccessible through or via the opening 802 when the storage container guides 804a, 804b are closed. The storage container guides 804a, 804b may be closed when a container-handling vehicle 122, 2222 has moved out of the column 504, 506 through the opening 802. The storage container guides 804 may be closed when a container-handling vehicle 122, 2222 is not within the column 504, 506. The container-handling vehicle 122, 2222 is shown next to or in front of the column 504, 506. The storage container guides 804 are configured to be closed when the container-handling vehicle 122, 2222 is not engaged with the storage container guides 804a, 804b.

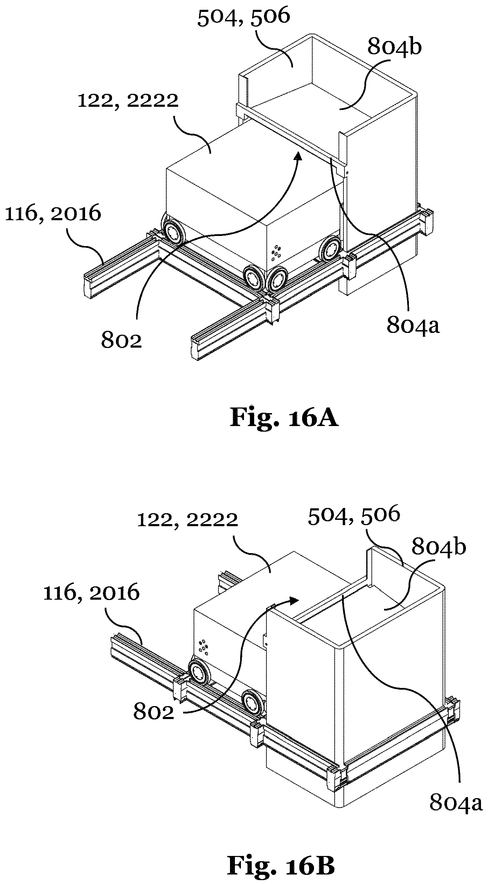

Figs. 16A-B show a second example of a column 504, 506 comprising an opening 802 having storage container guides 804a, 804b. Fig. 16A is a front left perspective view and Fig. 16B is a front right perspective view of the second example having a storage container guide 804 that is open. The column 504, 506 may be comprised by a vertical C beam 504, 506, as described in relation to Fig. 7A. The vertical C beam 504, 506 is arranged as a column 504, 506 having three enclosed sides and one opening 802. The opening 802 comprises first and second storage container guides 804a, 804b. The first storage container guide 804a is attached to the (separate) vertical edges of enclosed sides adjacent to or at the opening 802. The first storage container guide 804a forms a bar above each container-handling vehicle 122, 2222. This is advantageous to help guide storage containers through the column 504, 506. A container-handling vehicle 122, 2222 is shown on top of a section of a rail system 116, 2016. The container-handling vehicle 122, 2222 is shown within the column 504, 506, and more specifically, through the opening 802 of the column 504, 506. The second storage container guide 804b is configured to be open when the container-handling vehicle 122, 2222 is engaged with the second storage container guide 804b. The second storage container 804b guide may be described as a door. The second storage container guide 804b is attached to the first storage container guide 804a. The second storage container guide 804b is in an open state, or open, or opened. The opening 802 may be described as in an open state, or open, or opened. The column 504, 506 is accessible through or via the opening 802 when the second storage container guide 804b is open. The second storage container guide 804b may be opened when the container-handling vehicle 122, 2222 moves into the column 504, 506 through the opening 802.

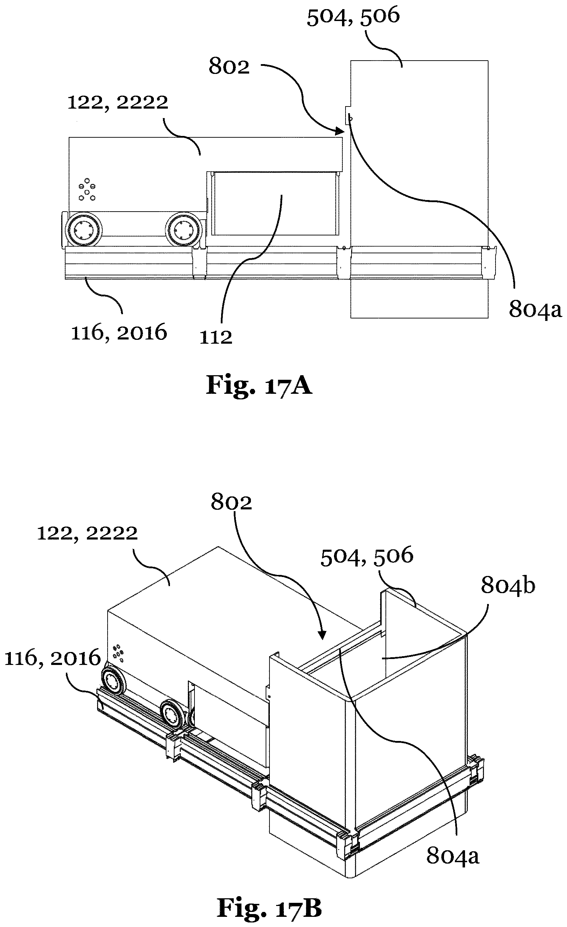

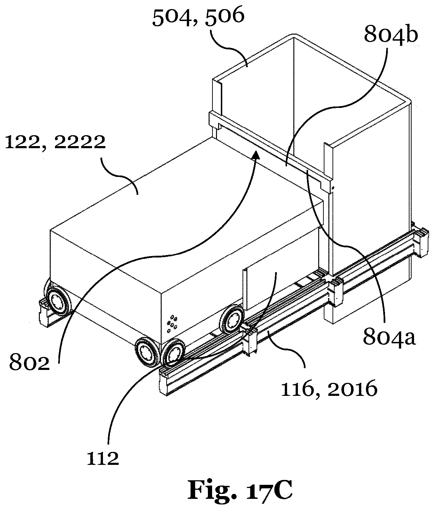

Figs. 17A-C show the second example of Figs. 16A-B having storage container guides 804a, 804b that are closed. Fig. 17A is a front view, Fig. 17B is a front right perspective view, and Fig. 17C is a front left perspective view of the second example having a storage container guide 804a, 804b that is closed. The second storage container guide 804b is in a closed state or closed. The column 504, 506 is inaccessible through or via the opening 802 when the second storage container guide 804b is closed. The second storage container guide 804b may be closed when the container-handling vehicle 122, 2222 has moved out of the column 504, 506 through the opening 802. The second storage container guide 804b may be closed when the container-handling vehicle 122, 2222 is not within the column 504, 506. The container-handling vehicle 122, 2222 is shown next to or in front of the column 504, 506. The second storage container guide 804b is configured to be closed when the container-handling vehicle 122, 2222 is not engaged with the second storage container guide 804b.

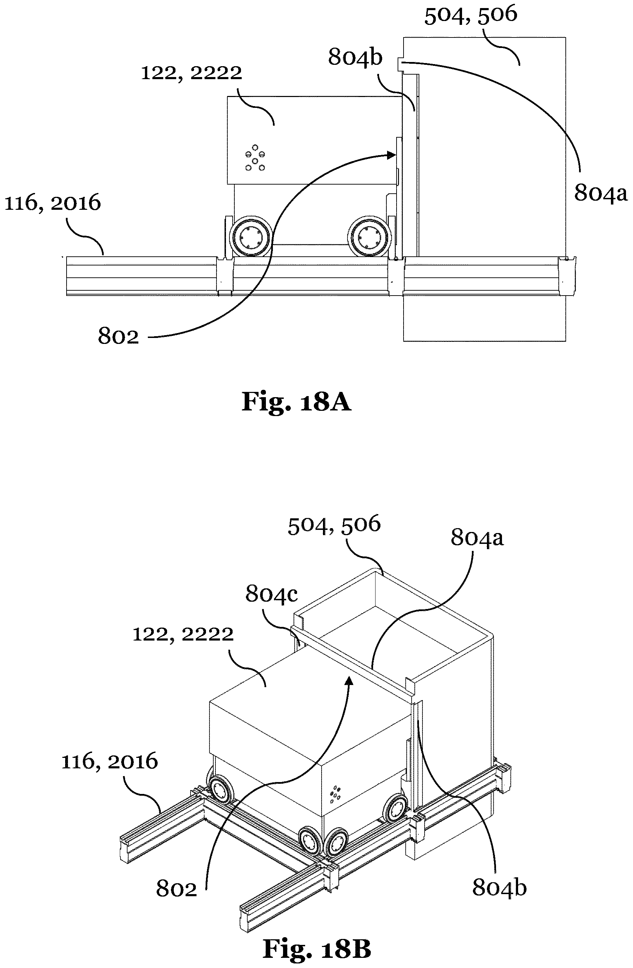

Figs. 18A-B show a third example of a column 504, 506 comprising an opening 802 having storage container guides 804. Fig. 18A is a front view and Fig. 18B is a front left perspective view of the first example having storage container guides 804 that are open. The system is the similar to the system of Figs. 16A-B, except the storage container guides 804 are different and are described below.

The opening 802 comprises first, second, and third storage container guides 804a, 804b, 804c. The first storage container guide 804a is the same as the first storage container guide 804a of Figs. 16A-B. The second and third storage container guides 804b, 804c may be described as lips or flaps. The second and third storage container guides 804b, 804c are each attached to respective or separate enclosed sides adjacent to or at the opening 802. In other words, the second and third storage container guides 804b, 804c are each attached to respective or separate vertical edges of enclosed sides adjacent to or at the opening 802. The second and third storage container guides 804b, 804c are in an open state, or open, or opened. The opening 802 may be described as in an open state, or open, or opened. The column 504, 506 is accessible through or via the opening 802 when the second and third storage container guides 804b, 804c are open. The second and third storage container guides 804b, 804c may be opened when the container-handling vehicle 122, 2222 moves into the column 504, 506 through the opening 802.

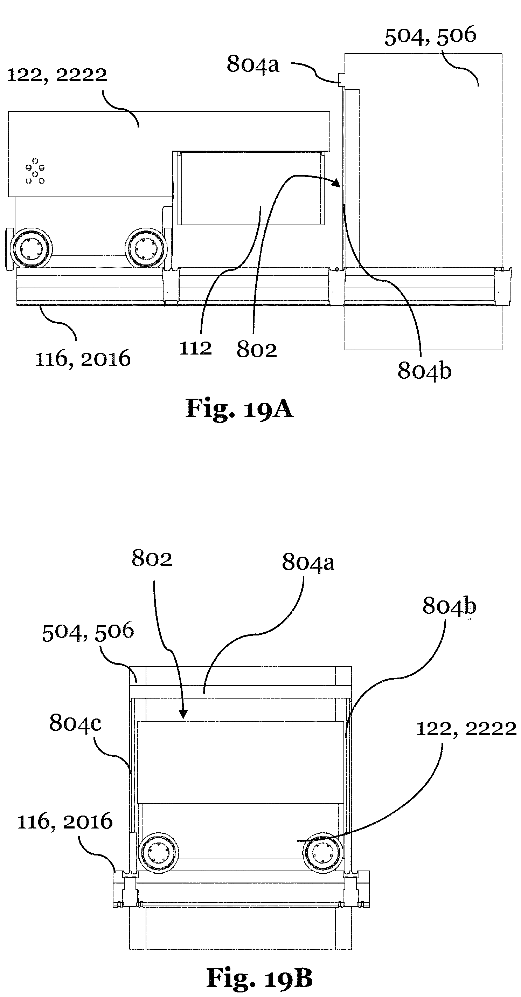

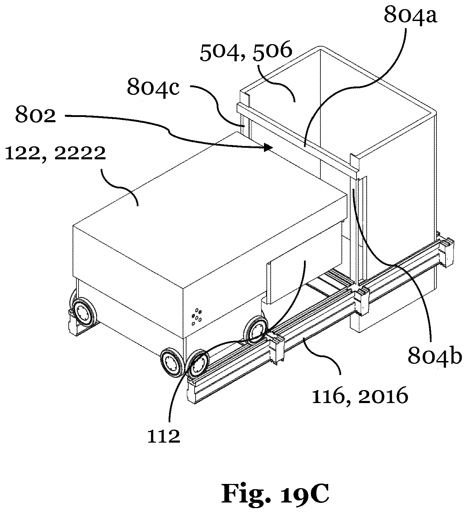

Figs. 19A-C show the third example of Figs. 18A-C having storage container guides 804a, 804b, 804c that are closed. Fig. 19A is a front view, Fig. 19B is a left view, and Fig. 19C is a front left perspective view of the third example having storage container guides 804a, 804b, 804c that are closed. The system is the similar to the system of Figs. 17A-C, except the storage container guides 804 are different and are described below.

The second and third storage container guides 804b, 804c are in a closed state, or closed. The column 504, 506 is inaccessible through or via the opening 802 when the second and third storage container guides 804b, 804c are closed. The second and third storage container guides 804b, 804c may be closed when the container-handling vehicle 122, 2222 has moved out of the column 504, 506 through the opening 802. The second and third storage container guides 804b, 804c may be closed when the container-handling vehicle 122, 2222 is not within the column 504, 506. The second and third storage container guides 804b, 804c are configured to be closed when the container-handling vehicle 122, 2222 is not engaged with the second and third storage container guides 804b, 804c.

Figs. 20A-C show a vertical C beam 504, 506 of the third example of Figs. 18A-B with a rail system 116, 2016. The container-handling vehicles 122, 2222 are not shown in Figs. 20A-C. Fig. 20A is a left view, Fig. 20B is the portion 'A' of Fig. 20A, and Fig. 20C is a front left perspective view of the third example having storage container guides 804 that are open. The rail system 116, 2016 comprises a section of each of the sets of rails 118, 120, 2018, 2020 of the first and second grids.

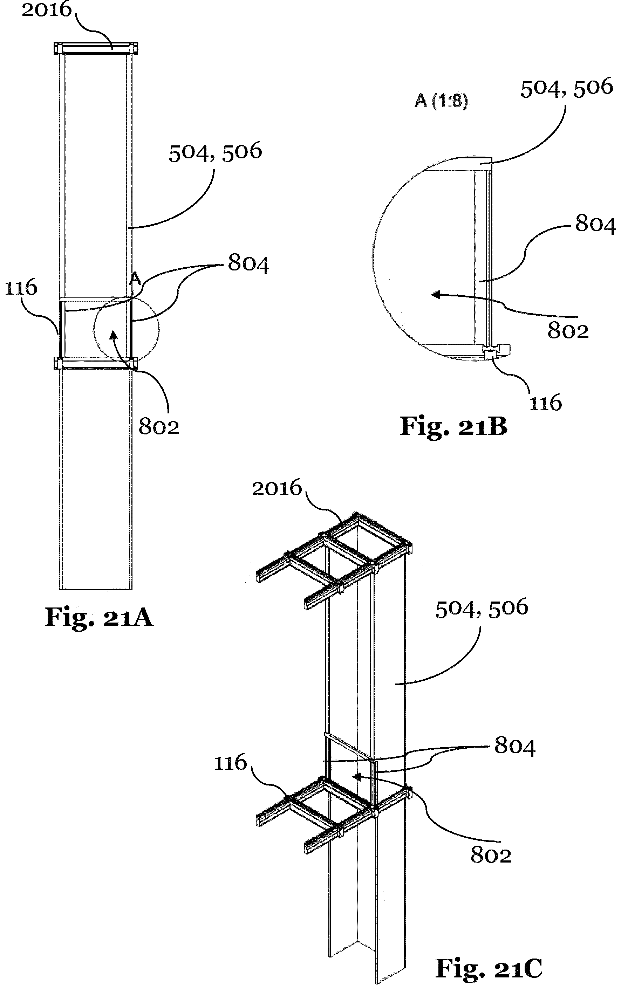

Figs. 21A-C show a vertical C beam 504, 506 of the third example of Figs. 19A-C with a rail system 116, 2016. The container-handling vehicles 122, 2222 are not shown in Figs. 21A-C. Fig. 21A is a left view, Fig. 21B is the portion 'A' of Fig. 21A, and Fig. 21C is a front left perspective view of the third example having storage container guides 804 that are closed. The rail system 116, 2016 comprises the section of each of the sets of rails 118, 120, 2018, 2020 of the first and second grids 100, 500 as shown in Fig. 20C.

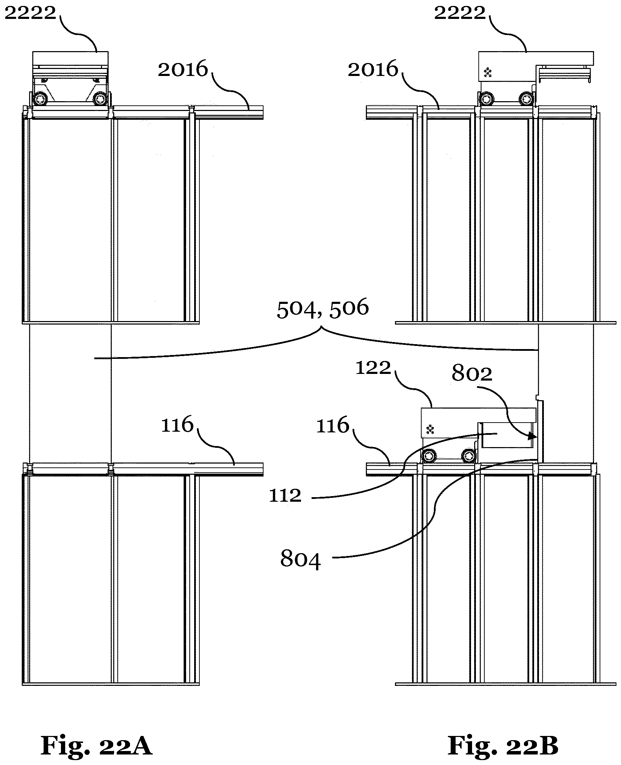

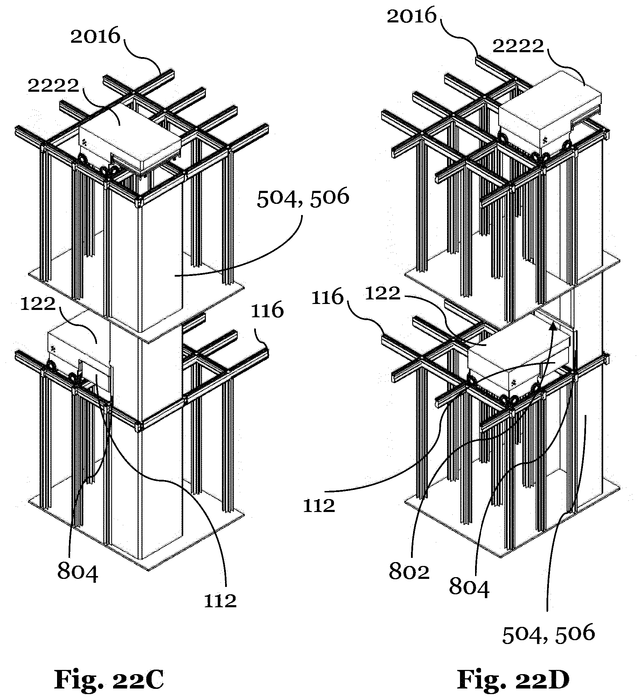

Figs. 22A-D show an example system comprising first and second grids 100, 500. Fig. 22A is a right view, Fig. 22B is a front view, Fig. 22C is a front right perspective view, and Fig. 22D is a front left perspective view of the example system.

The first grid 100 has a first grid frame formed by first vertical storage columns 102 for accommodating one or more first stacks of storage containers 102. The second grid 500 is disposed above the first grid 100. The second grid 500 has a second grid frame formed by second vertical storage columns 502 for accommodating one or more second stacks of storage containers. The first and second grids 100, 500 each comprise five vertical storage columns in each grid 100, 500. The first and second grids 100, 500 may comprise any number of vertical storage columns 102, 502.

The system further comprises one vertical beam 504, 506 disposed in the first and second grid and configured to structurally support the second grid 500.

The first and second grids 100, 500 each comprise a rail system 116, 2016 having a first set of parallel rails 118a, 118b, 2018a, 2018b arranged in a horizontal plane and extending in a first direction 108 and a second set of parallel rails 120a, 120b, 2018a, 2018b arranged in the horizontal plane and extending in a second direction 110 which is orthogonal to the first direction 108. The first grid 100 comprises one first container-handling vehicle 122 that is configured to move along the two sets of parallel rails 118, 120 of the rail system 116 of the first grid 100. The first container-handling vehicle 122 is engaged with a storage container 112 and is next to the vertical beam 504, 506. The second grid 500 comprises one second container-handling vehicle 2222 that is configured to move along the two sets of parallel rails 2018, 2020 of the rail system 2016 of the second grid 500. The second container-handling vehicle 2222 is above the vertical beam 504, 506.

The vertical beam 504, 506 comprises a column 504, 506 having three enclosed sides, and an opening 802 in the first grid 100. The opening 802 comprises at least one storage container guide. The attachment of the at least one storage container guide 804 to the opening 802 may be any combination of the described attachments. The at least one storage container guide 804 i in a closed state or closed. The column 504, 506 is inaccessible through or via the opening 802 in the first grid 100 as the at least one storage container guide 804 is closed. The at least one storage container guide 804 may close when the first container-handling vehicle 122 moved out of the column 504, 506 through the opening 802. The at least one storage container guide 804 may close when the first container-handling vehicle 122 is not within the column 504, 506. The at least one storage container guide 804 is configured to be closed when the first container-handling vehicle 122 is not engaged with the at least one storage container guide. The vertical beam 504, 506 does not extend above the rail system 116, 2016 of the second grid 500.

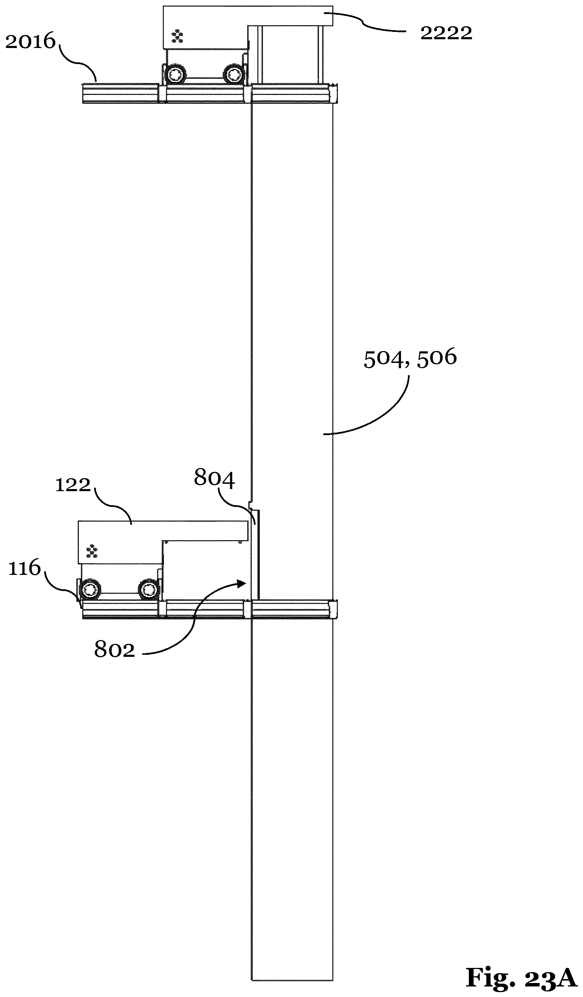

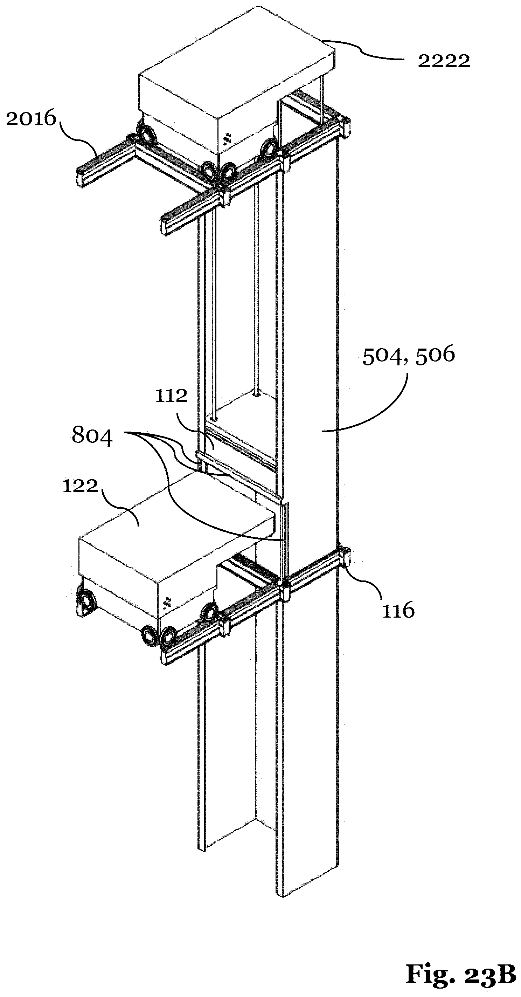

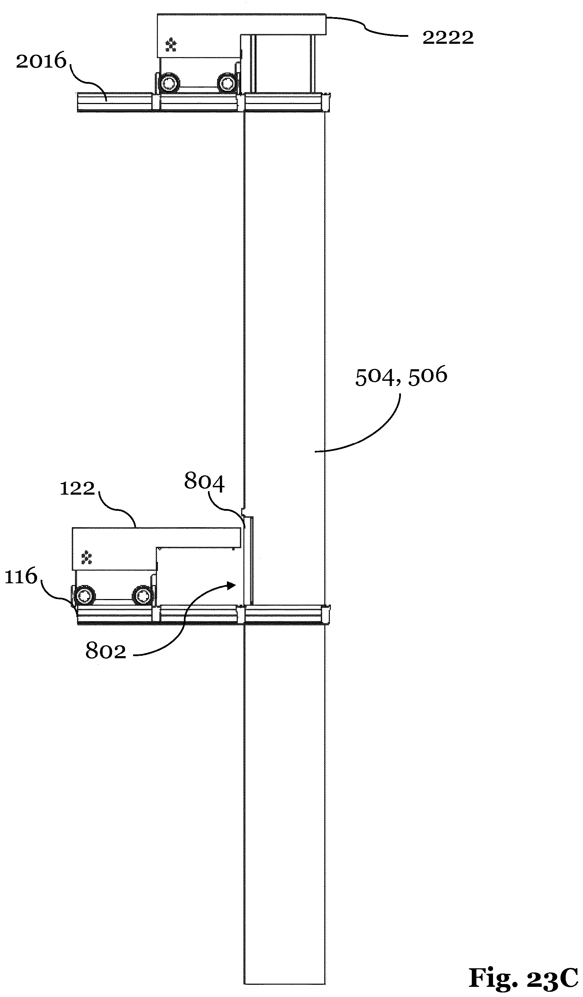

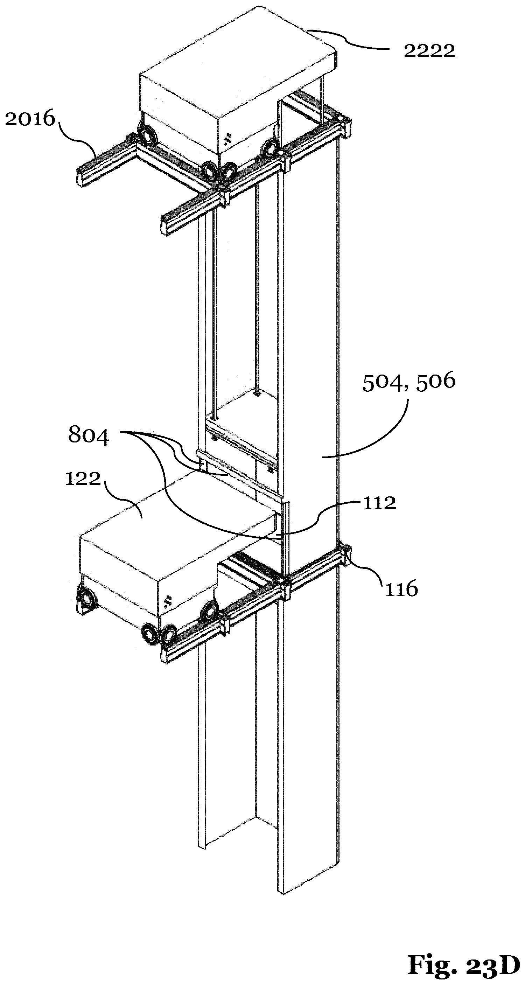

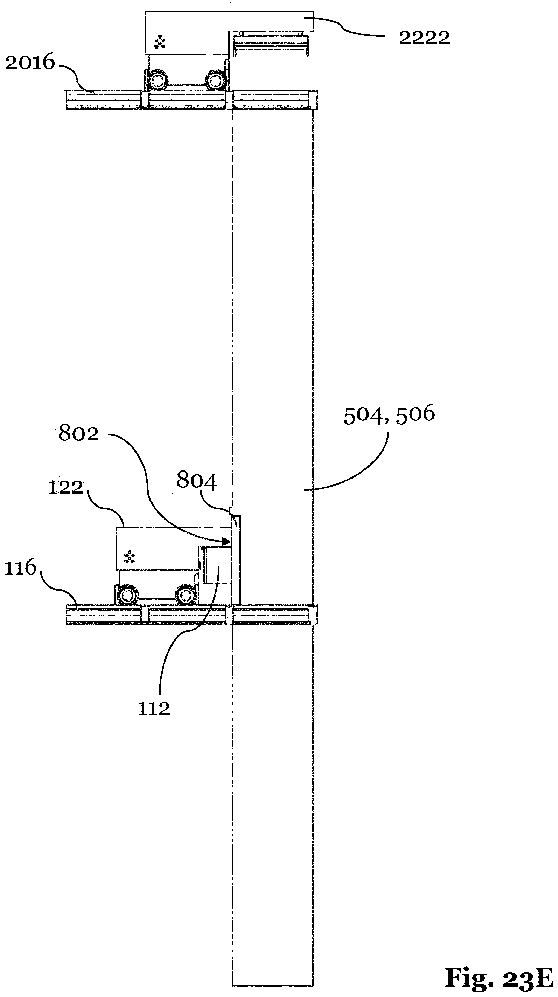

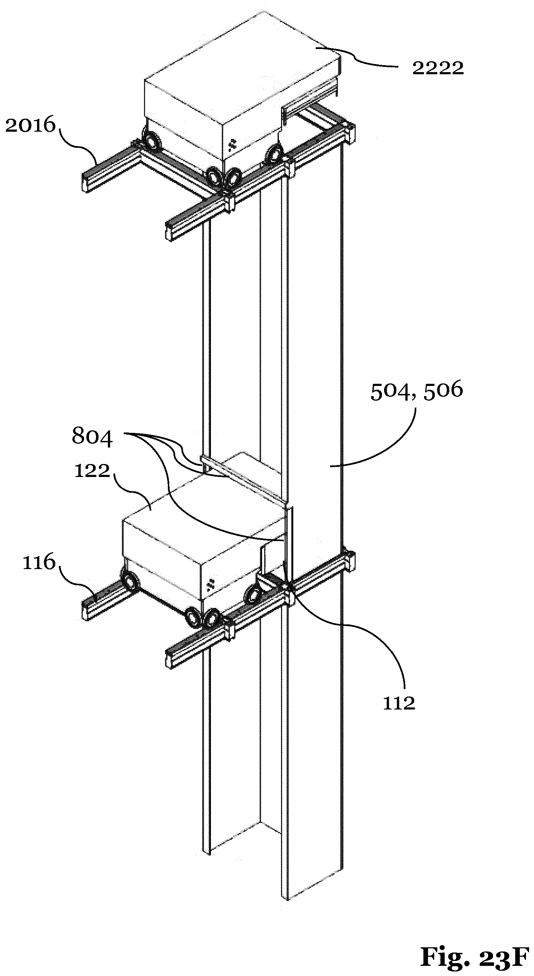

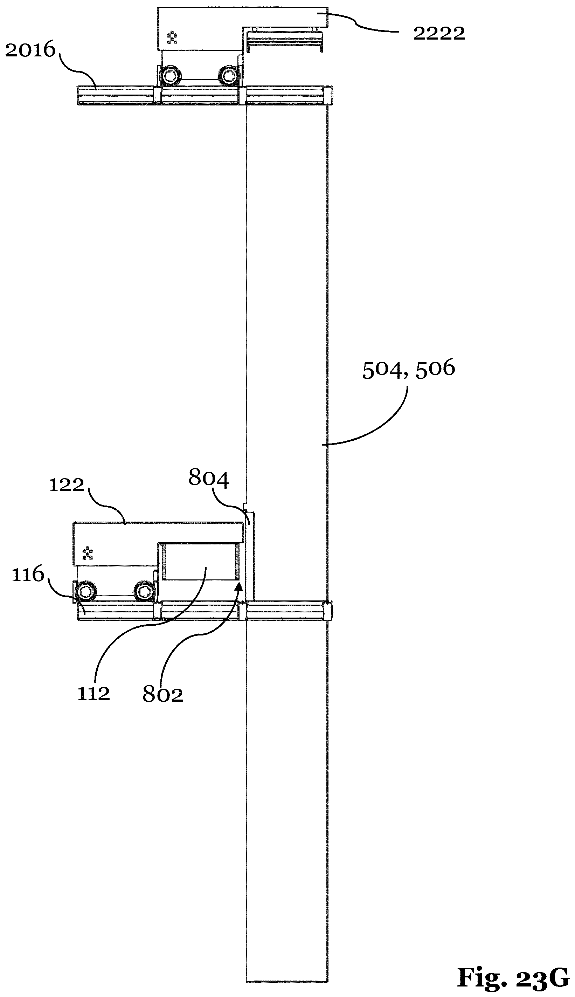

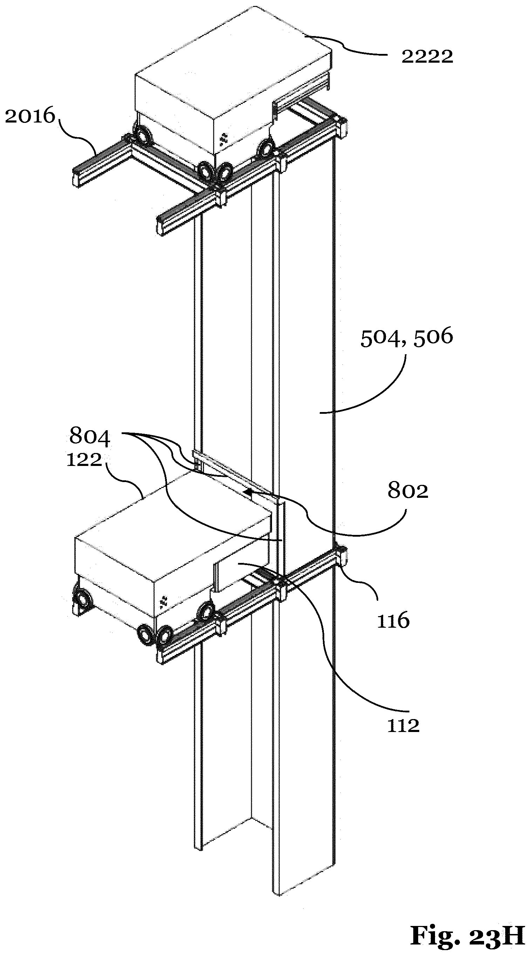

Figs. 23A-G show an example sequence comprising a section of a first and a second grid. Fig. 23A is a front view of a first step, Fig. 23B is a front left perspective view of the first step, Fig. 23C is a front view of a second step, Fig. 23D is a front left perspective view of the second step, Fig. 23E is a front view of a third step, Fig. 23F is a front left perspective view of the third step, Fig. 23G is a front view of a fourth step, and Fig. 23H is a front left perspective view of the fourth step of the example sequence.

The section of the first and second grids 100, 500 shown in Figs. 23A-G maybe first and second grids, wherein an example system further comprises a rail system 116, 2016 having a first set of parallel rails 118a, 118b, 2018a, 2018b arranged in a horizontal plane and extending in a first direction 108, and a second set of parallel rails 120a, 120b, 2020a, 2020b arranged in the horizontal plane and extending in a second direction 110 which is orthogonal to the first direction 108. The first grid 100 comprises one first container-handling vehicle 122 that is configured to move along the two sets of parallel rails 118, 120 of the rail system 116 of the first grid 100. The second grid 500 comprises one second container-handling vehicle 2222 that is configured to move along the two sets of parallel rails 2018, 2020 of the rail system 2016 of the second grid 500.

The system further comprises one vertical beam 504, 506 disposed in the first and second grids 100, 500 and configured to structurally support the second grid 500. In general, the vertical beam 504, 506 may be arranged as a port column (or column) for transit of storage containers between the first and second grids 100, 500. The second container-handling vehicle 2222 may be configured to raise at least one storage container 112 from the first grid 100 to the second grid 500 via the port column. The second container-handling vehicle 2222 may be configured to lower at least one storage container from the second grid 500 to the first grid 100 via the port column. The vertical beam 504, 506 does not extend above the rail system 2016 of the second grid 500.

The vertical beam 504, 506 comprises a column 504, 506 having three enclosed sides, and an opening 802 in the first grid 100. The opening 802 comprises at least two storage container guides 804. The two storage container guides 804 are each attached to respective or separate enclosed sides adjacent to or at the opening 802. In other words, the two storage container guides 804 are each attached to respective or separate vertical edges of enclosed sides adjacent to or at the opening 802.

In the first step in the sequence, the second container-handling vehicle 2222 engages with and lowers a storage container from the second grid 500 to the first grid 100 through the column 504, 506 in the second grid 500. The storage container guides 804 are in a closed state or closed. The column 504, 506 is inaccessible through or via the opening 802 in the first grid 100 as the storage container guides 804 are closed. The storage container guides 804 are closed because the first container-handling vehicle 122 is not engaged with the storage container guides 804. A position of the storage container in the first grid 100 after being lowered may be described as an exchange position.

In the second step in the sequence, the storage container is in the first grid 100, i.e., in the exchange position. The second container-handling vehicle 2222 disengages with the storage container and moves away from the column 504, 506.

In the third step of the sequence, the first container-handling vehicle 122 moves into the column 504, 506 and engages with storage container in the exchange position. The storage container guides 804 in the first grid 100 are in an open state, or open, or opened. The opening 802 may be described as in an open state, or open, or opened. The column 504, 506 is accessible through or via the opening 802 when the storage container guides 804 are open. The storage container guides 804 may be opened when the container-handling vehicle 122 moves into the column 504, 506 through the opening 802.

In the fourth step of the sequence, the first container-handling vehicle 122 moves out of the column 504, 506 in the first grid 100, thereby moving the storage container out of the column 504, 506 in the first grid 100. The storage container guides 804 may close when the first container-handling vehicle 122 moves out of the column through the opening 802. The at least one storage container guide 804 may close when the first container-handling vehicle 122 is no longer within the column.

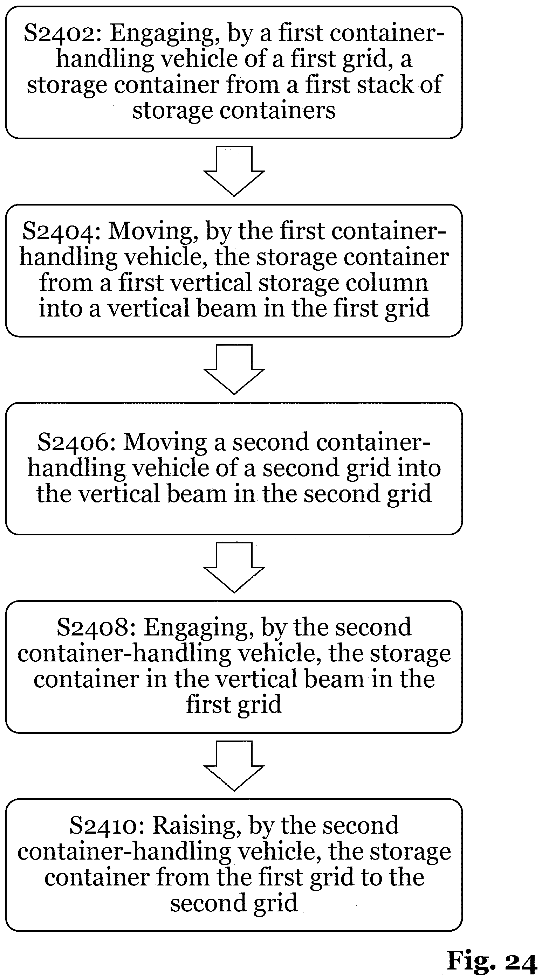

Fig. 24 shows a flowchart illustrating a method of the present disclosure. The method relates to transferring at least one storage container 112 from a first grid 100 to a second grid 500 of a storage and retrieval system.

As described throughout the present disclosure, the first grid 100 has a first grid frame formed by first vertical storage columns 102 for accommodating one or more first stacks of storage containers 102. The second grid 500, disposed above the first grid 100, has a second grid frame formed by second vertical storage columns 502 for accommodating one or more second stacks of storage containers. A vertical beam 504, 506 transverses the first and second grids 100, 500 and structurally supports the second grid 500. The storage and retrieval system relates to any of the above-described examples of the present disclosure.

As a first step S2402, the method comprises engaging, by a first container-handling vehicle 122 of the first grid 100, a storage container 112 from the first stack of storage containers 112. At a second step S2404, the method comprises moving, by the first container-handling vehicle 122, the storage container 112 from the first vertical storage column 102 into the vertical beam 504, 506 in the first grid 100. At a third step S2406, the method comprises moving a second container-handling vehicle 2222 of the second grid 500 into or above the vertical beam 504, 506 in the second grid 500. At a fourth step S2408, the method comprises engaging, by the second container-handling vehicle 2222, the storage container 112 in the vertical beam 504, 506 in the first grid 100. At a fifth step S2410, the method comprises raising, by the second container-handling vehicle 2222, the storage container 112 from the first grid 100 to the second grid 500. Raising the storage container may be described as raising the storage container the through the vertical beam 504, 506 or column.

After the second step S2404, the method may comprise disengaging from, by the first container-handling vehicle 122, the storage container 112. The method may further comprise moving the first container-handling vehicle 122 out of the vertical beam 504, 506 in the first grid 100.

The method may comprise moving the first container-handling vehicle 122 of the first grid 100 out of the vertical beam 504, 506 in the first grid 100 before or during the third step S2406, or before the fourth step S2408, or the fifth step S2408.

After the fifth step S2410, the method may comprise moving, by the second container-handling vehicle 2222, the storage container 112 from the vertical beam 504, 506 in the second grid 500 into a second stack of storage containers of the one or more second stacks of storage containers accommodated by a second vertical storage column 502 of the second vertical storage columns 502.

Alternatively, the method may relate to transferring at least one storage container from the second grid 500 to the first grid 100 of a storage and retrieval system. In this case, the method may comprise engaging, by the second container-handling vehicle 2222 of the second grid 500, a storage container from the second stack of storage containers. The method may further comprise moving, by the second container-handling vehicle 2222, the storage container from the second vertical storage column 502 into or above the vertical beam 504, 506 in the second grid 500. The method may further comprise lowering, by the second container-handling vehicle 2222, the storage container from the second grid 500 to the first grid 100. Lowering the storage container may be described as lowering the storage container the through the vertical beam 504, 506 or column. The method may further comprise disengaging from, by the second container-handling vehicle 2222, the storage container. The method may further comprise moving the second container-handling vehicle 2222 out of or away from the vertical beam 504, 506 in the second grid 500. The method may further comprise moving the first container-handling vehicle 122 of the first grid 100 into the vertical beam 504, 506 in the first grid 100. The method may further comprise engaging, by the first container-handling vehicle 122, the storage container in the vertical beam 504, 506 in the first grid 100. The method may further comprise moving, by the first container-handling vehicle 122, the storage container from the vertical beam 504, 506 in the first grid 100 into a first stack of storage containers of the one or more first stacks of storage containers accommodated by a first vertical storage column 102 of the first vertical storage columns 102.

In any described example, when the vertical beam 504, 506 comprises an opening 802 for receiving the first or second container-handling vehicle 122, 2222, the opening 802 including at least one storage container guide 804 attached to at least one of two at least partially enclosed sides of the vertical beam 504, 506 configured to at least partially close the opening 802, the method may further comprise opening 802 the at least one storage container guide 804 for movement of the storage container from the first vertical storage column 102 into the vertical beam 504, 506 in the first grid 100. The method may further comprise opening 802 the at least one storage container guide 804 for movement of the first container-handling vehicle 122 into the vertical beam 504, 506 in the first grid 100. The method may further comprise opening 802 the at least one storage container guide 804 for movement of the storage container from the second vertical storage column 502 into the vertical beam 504, 506 in the second grid 500. The method may further comprise opening 802 the at least one storage container guide 804 for movement of the second container-handling vehicle 2222 into the vertical beam 504, 506 in the second grid 500. The method may further comprise closing the at least one storage container guide 804 when the first container-handling vehicle 122 has moved out of the vertical beam 504, 506 in the first grid 100. The method may further comprise closing the at least one storage container guide 804 when the storage container has moved from the vertical beam 504, 506 in the first grid 100 into the first vertical storage column 102. The method may further comprise closing the at least one storage container guide 804 when the second container-handling vehicle 2222 has moved out of the vertical beam 504, 506 in the second grid 500. The method may further comprise closing the at least one storage container guide 804 when the storage container has moved from the vertical beam 504, 506 in the second grid 500 into the second vertical storage column 502.

The method may comprise moving the first container-handling vehicle 122 of the first grid 100 out of the vertical beam 504, 506 in the first grid 100 before or during moving the second container-handling vehicle 2222 of the second grid 500 into or above the vertical beam 504, 506 in the second grid 500. The method may comprise moving the first container-handling vehicle 122 of the first grid 100 out of the vertical beam 504, 506 in the first grid 100 before or during moving the storage container from the second vertical storage column 502 into or above the vertical beam 504, 506 in the second grid 500. The method may comprise moving the first container-handling vehicle 122 of the first grid 100 out of the vertical beam 504, 506 in the first grid 100 before lowering, by the second container-handling vehicle 2222, the storage container from the second grid 500 to the first grid 100.

In any described example, the opening 802 may receive only the first container-handling vehicle 122. In this case, the method comprises moving a second container-handling vehicle 2222 of the second grid 500 above the vertical beam 504, 506 in the second grid 500. The at least one storage container guide 804 may not open for the second container-handling vehicle 2222 when the second container-handling vehicle 2222 of the second grid 500 is above the vertical beam 504, 506 in the second grid 500, i.e., when the second container-handling vehicle 2222 of the second grid 500 is above the vertical beam 504, 506 in the second grid 500, not within the vertical beam 504, 506 in the second grid 500.

When the second container-handling vehicle 2222 of the second grid 500 is above the vertical beam 504, 506 in the second grid 500, the method may further comprise closing the at least one storage container guide 804 for movement of the storage container from the second vertical storage column 502 into the vertical beam 504, 506 in the second grid 500. The method may further comprise closing the at least one storage container guide 804 for movement of the second container-handling vehicle 2222 above the vertical beam 504, 506 in the second grid 500. The method may further comprise closing the at least one storage container guide 804 when the second container-handling vehicle 2222 raises the storage container (within the vertical beam 504, 506). The method may further comprise closing the at least one storage container guide 804 when the second container-handling vehicle 2222 lowers the storage container (within the vertical beam 504, 506). In this way, the at least one storage container guide 804 aids in guiding the storage container through the vertical beam 504, 506.

The at least one storage container guide 804 may close when the first container-handling vehicle 122 does not engage or contact the at least one storage container guide. The at least one storage container guide 804 may open when the first container-handling vehicle 122 engages or contacts the at least one storage container guide. Therefore, the method may comprise moving the first container-handling vehicle 122 of the first grid 100 out of the vertical beam 504, 506 in the first grid 100 before or during moving the second container-handling vehicle 2222 of the second grid 500 into or above the vertical beam 504, 506 in the second grid 500. The method may comprise moving the first container-handling vehicle 122 of the first grid 100 out of the vertical beam 504, 506 in the first grid 100 before or during engaging, by the second container-handling vehicle 2222, the storage container in the vertical beam 504, 506 in the first grid 100. The method may comprise moving the first container-handling vehicle 122 of the first grid 100 out of the vertical beam 504, 506 in the first grid 100 before raising, by the second container-handling vehicle 2222, the storage container from the first grid 100 to the second grid 500. The method may comprise moving the first container-handling vehicle 122 of the first grid 100 out of the vertical beam 504, 506 in the first grid 100 before or during movement of the storage container from the second vertical storage column 502 into or above the vertical beam 504, 506 in the second grid 500. The method may comprise moving the first container-handling vehicle 122 of the first grid 100 out of the vertical beam 504, 506 in the first grid 100 before lowering, by the second container-handling vehicle 2222, the storage container from the second grid 500 to the first grid 100.

A computer-readable medium may be provided, the computer-readable medium comprising instructions which, when executed by a processor of a device, cause the device to perform the described method.

Aspects of the present disclosure are set out below. Each item below corresponds to an aspect of the disclosure, and each possible combination of any of the items corresponds to an aspect of the disclosure. When items are combined, two or more instances of an element with the same name are to be understood as referring to the same element, even if the element is introduced by the word "a" more than once. Each possible combination of any features from the items below with any features described above also forms part of the disclosure.
1a. An automated storage and retrieval system comprising:
   a first grid having a first grid frame formed by first vertical storage columns for accommodating one or more first stacks of storage containers;
   a second grid, disposed above the first grid, the second grid having a second grid frame formed by second vertical storage columns for accommodating one or more second stacks of storage containers.
1b. An automated storage and retrieval system comprising:
   a first grid having a first grid frame formed by first vertical storage columns for accommodating one or more first stacks of storage containers;
   a second grid, disposed above the first grid, the second grid having a second grid frame formed by second vertical storage columns for accommodating one or more second stacks of storage containers; and
   at least one vertical beam configured to structurally support the second grid.
1c. An automated storage and retrieval system comprising:
   a first grid having a first grid frame formed by first vertical storage columns for accommodating one or more first stacks of storage containers;
   a second grid, disposed above the first grid, the second grid having a second grid frame formed by second vertical storage columns for accommodating one or more second stacks of storage containers; and
   at least one vertical beam only disposed in the first grid and configured to structurally support the second grid.

1. An automated storage and retrieval system comprising:
   a first grid having a first grid frame formed by first vertical storage columns for accommodating one or more first stacks of storage containers;
   a second grid, disposed above the first grid, the second grid having a second grid frame formed by second vertical storage columns for accommodating one or more second stacks of storage containers; and
   at least one vertical beam disposed in the first grid.
2. An automated storage and retrieval system comprising:
   a first grid having a first grid frame formed by first vertical storage columns for accommodating one or more first stacks of storage containers; and
   a second grid, disposed above the first grid, the second grid having a second grid frame formed by second vertical storage columns for accommodating one or more second stacks of storage containers; and
   at least one vertical beam disposed in the first grid and configured to structurally support the second grid.
3. The automated storage and retrieval system of aspect 1 or aspect 2, wherein the at least one vertical beam is configured to structurally support a floor of the second grid.
4. The automated storage and retrieval system of any one of the preceding aspects, wherein the at least one vertical beam comprises a column having two at least partially enclosed sides.
5. The automated storage and retrieval system of any one of the preceding aspects, wherein the at least one vertical beam comprises an opening.
6. The automated storage and retrieval system of any one of the preceding aspects, wherein the at least one vertical beam is disposed in the second grid.
7. The automated storage and retrieval system of any one of the preceding aspects, wherein the at least one vertical beam extends continuously from a base of the first grid frame to a top of the second grid frame.
8. The automated storage and retrieval system of any one of the preceding aspects, wherein the at least one vertical beam is one of: a C beam, H beam, HSS beam, I beam, L beam, T beam, or X beam.
9. The automated storage and retrieval system of any one of the preceding aspects, wherein the at least one vertical beam is arranged as a storage column.
10. The automated storage and retrieval system of any one of the preceding aspects, wherein the at least one vertical beam is arranged as a port column for transit of storage containers between the first and second grids.
11. The automated storage and retrieval system of any one of the preceding aspects, wherein the first and second grids each comprise a rail system having:
   a first set of parallel rails arranged in a horizontal plane and extending in a first direction; and
   a second set of parallel rails arranged in the horizontal plane and extending in a second direction which is orthogonal to the first direction.
12. The automated storage and retrieval system of any one of the preceding aspects, wherein the first grid comprises at least one first container-handling vehicle that is configured to move along two sets of parallel rails of a rail system of the first grid, and
   wherein the second grid comprises at least one second container-handling vehicle that is configured to move along two sets of parallel rails of a rail system of the second grid.
13. The automated storage and retrieval system of any one of the preceding aspects, wherein a or the at least one second container-handling vehicle is configured to raise at least one storage container from the first grid to the second grid via one of: the at least one vertical beam; or the at least one vertical beam is arranged as a or the port column.
14. The automated storage and retrieval system of any one of the preceding aspects, wherein a or the at least one second container-handling vehicle is configured to lower at least one storage container from the second grid to the first grid via one of: the at least one vertical beam; or the at least one vertical beam is arranged as a or the port column.
15. The automated storage and retrieval system of any one of the preceding aspects, wherein the at least one vertical beam comprises a or the port column having two at least partially enclosed sides, and an opening accessible by the first and/or second container-handling vehicles via the opening.
16. The automated storage and retrieval system of any one of the preceding aspects, wherein an or the opening of the at least one vertical beam comprises at least one storage container guide attached to at least one of a or the two at least partially enclosed sides of the at least one vertical beam.
17. The automated storage and retrieval system of aspect 16, wherein the at least one storage container guide is configured to at least partially close the opening.
18. The automated storage and retrieval system of aspect 16 or 17, wherein the at least one storage container guide comprises at least one of: a flap, a lip, a door, or a barrier.
19. A method of transferring at least one storage container from a first grid to a second grid of a storage and retrieval system, the first grid having a first grid frame formed by first vertical storage columns for accommodating one or more first stacks of storage containers, and the second grid, disposed above the first grid, having a second grid frame formed by second vertical storage columns for accommodating one or more second stacks of storage containers, in which a vertical beam transverses the first and second grids, the method comprising:
   engaging, by the second container-handling vehicle, a storage container in the vertical beam in the first grid; and
   raising, by the second container-handling vehicle, the storage container from the first grid to the second grid.
20. A method of transferring at least one storage container from a first grid to a second grid of a storage and retrieval system, the first grid having a first grid frame formed by first vertical storage columns for accommodating one or more first stacks of storage containers, and the second grid, disposed above the first grid, having a second grid frame formed by second vertical storage columns for accommodating one or more second stacks of storage containers, in which a vertical beam transverses the first and second grids and structurally supports the second grid, the method comprising:
   engaging, by the second container-handling vehicle, a storage container in the vertical beam in the first grid; and
   raising, by the second container-handling vehicle, the storage container from the first grid to the second grid.
21. The method of aspect 19 or aspect 20, further comprising, before engaging the storage container in the vertical beam in the first grid:
   engaging, by a first container-handling vehicle of the first grid, a storage container from the first stack of storage containers; and
   moving, by the first container-handling vehicle, the storage container from the first vertical storage column into the vertical beam in the first grid.
22. The method of aspect 21, further comprising, before engaging the storage container in the vertical beam in the first grid, moving a second container-handling vehicle of the second grid into the vertical beam in the second grid.
23. The method of any one of aspects 20 to 22, wherein the vertical beam comprises an opening for receiving the first or second container-handling vehicle, the opening including at least one storage container guide attached to at least one of two at least partially enclosed sides of the vertical beam configured to at least partially close the opening, the method further comprising:
   closing the at least one storage container guide when the second container-handling vehicle engages with the storage container; and/or
   closing the at least one storage container guide when the second container-handling vehicle raises the storage container.
24. The method of any one of aspect 21, or aspect 22, or aspect 23 when dependent on aspect 21 or aspect 22, wherein the vertical beam comprises an or the opening for receiving the first or second container-handling vehicle, the opening including at least one storage container guide attached to an or the at least one of two at least partially enclosed sides of the vertical beam configured to at least partially close the opening, the method further comprising opening the at least one storage container guide for movement of the storage container from the first vertical storage column into the vertical beam in the first grid.
25. The method of any one of aspect 22, or aspect 23 or aspect 24 when dependent on aspect 22, wherein the vertical beam comprises an or the opening for receiving the first or second container-handling vehicle, the opening including at least one storage container guide attached to an or the at least one of two at least partially enclosed sides of the vertical beam configured to at least partially close the opening, the method further comprising closing the at least one storage container guide for movement of the second container-handling vehicle into the vertical beam in the second grid.
26. A computer-readable medium comprising instructions which, when executed by a processor of a device, cause the device to perform the method of any one of aspects 19 to 25.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An automated storage and retrieval system comprising:
a first grid having a first grid frame formed by first vertical storage columns for accommodating one or more first stacks of storage containers;
a second grid, disposed above the first grid, the second grid having a second grid frame formed by second vertical storage columns for accommodating one or more second stacks of storage containers; and
at least one vertical beam disposed in the first grid and configured to structurally support the second grid.

2. The automated storage and retrieval system of claim 1, wherein the at least one vertical beam is configured to structurally support a floor of the second grid.

3. The automated storage and retrieval system of claim 1 or claim 2, wherein the at least one vertical beam comprises a column having two at least partially enclosed sides, and an opening.

4. The automated storage and retrieval system of any one of the preceding claims, wherein the at least one vertical beam is disposed in the second grid.

5. The automated storage and retrieval system of any one of the preceding claims, wherein the at least one vertical beam extends continuously from a base of the first grid frame to a top of the second grid frame.

6. The automated storage and retrieval system of any one of the preceding claims, wherein the at least one vertical beam is one of: a C beam, H beam, HSS beam, I beam, L beam, T beam, or X beam.

7. The automated storage and retrieval system of any one of the preceding claims, wherein the at least one vertical beam is arranged as a storage column.

8. The automated storage and retrieval system of any one of the preceding claims, wherein the at least one vertical beam is arranged as a port column for transit of storage containers between the first and second grids.

9. The automated storage and retrieval system of any one of the preceding claims, wherein the first and second grids each comprise a rail system having:
a first set of parallel rails arranged in a horizontal plane and extending in a first direction; and
a second set of parallel rails arranged in the horizontal plane and extending in a second direction which is orthogonal to the first direction,
wherein the first grid comprises at least one first container-handling vehicle that is configured to move along the two sets of parallel rails of the rail system of the first grid, and
wherein the second grid comprises at least one second container-handling vehicle that is configured to move along the two sets of parallel rails of the rail system of the second grid.

10. The automated storage and retrieval system of claim 9 when dependent upon claim 8, wherein the at least one second container-handling vehicle is configured to:
raise at least one storage container from the first grid to the second grid via the port column; and/or
lower at least one storage container from the second grid to the first grid via the port column.

11. The automated storage and retrieval system of claim 9 when dependent upon claim 8, or claim 10, wherein the port column includes having two at least partially enclosed sides, and an opening accessible by the first and/or second container-handling vehicles via the opening.

12. The automated storage and retrieval system of claim 3 or claim 11, wherein the opening comprises at least one storage container guide attached to at least one of the two at least partially enclosed sides and configured to at least partially close the opening; and optionally
wherein the at least one storage container guide comprises at least one of: a flap, a lip, a door, or a barrier.

13. A method of transferring at least one storage container from a first grid to a second grid of a storage and retrieval system, the first grid having a first grid frame formed by first vertical storage columns for accommodating one or more first stacks of storage containers, and the second grid, disposed above the first grid, having a second grid frame formed by second vertical storage columns for accommodating one or more second stacks of storage containers, in which a vertical beam transverses the first and second grids and structurally supports the second grid, the method comprising:
engaging, by a first container-handling vehicle of the first grid, a storage container from the first stack of storage containers;
moving, by the first container-handling vehicle, the storage container from the first vertical storage column into the vertical beam in the first grid;
moving a second container-handling vehicle of the second grid into the vertical beam in the second grid;
engaging, by the second container-handling vehicle, the storage container in the vertical beam in the first grid; and
raising, by the second container-handling vehicle, the storage container from the first grid to the second grid.

14. The method of claim 13, wherein the vertical beam comprises an opening for receiving the first or second container-handling vehicle, the opening including at least one storage container guide attached to at least one of two at least partially enclosed sides of the vertical beam configured to at least partially close the opening, the method further comprising:
opening the at least one storage container guide for movement of the storage container from the first vertical storage column into the vertical beam in the first grid; and/or
closing the at least one storage container guide for movement of the second container-handling vehicle into the vertical beam in the second grid; and/or
closing the at least one storage container guide when the second container-handling vehicle engages with the storage container in the vertical beam; and/or
closing the at least one storage container guide when the second container-handling vehicle raises the storage container.

15. A computer-readable medium comprising instructions which, when executed by a processor of a device, cause the device to perform the method of claim 13 or 14.
